# FASCICULE DE BREVET EUROPEEN

(11) **EP 2 349 782 B1**
(45) Date de publication et mention de la délivrance du brevet: **06.04.2016**
(21) Numéro de dépôt: 09760221.3
(22) Date de dépôt: 27.10.2009
(51) Int. Cl.: B32B 17/10, B60Q 1/26, F21V 8/00, B60Q 3/02

(54) **MODULE A DIODES ELECTROLUMINESCENTES POUR VEHICULE, FABRICATIONS**
LEUCHTDIODENMODUL FÜR EIN FAHRZEUG UND HERSTELLUNGEN
LIGHT-EMITTING DIODE MODULE FOR A VEHICLE, AND PRODUCTIONS

(30) Priorité: 27.10.2008 FR 0857298
(43) Date de publication de la demande: 03.08.2011
(73) Titulaire: Saint-Gobain Glass France, 92400 Courbevoie (FR)
(72) Inventeur: VERRAT-DEBAILLEUL, Adèle, 60150 Villers-sur-Coudun (FR); MOTTELET, Béatrice, F-60200 Compiegne (FR)
(74) Mandataire: Cardin, Elise
(86) Numéro de dépôt international: PCT/FR2009/052064
(87) Numéro de publication internationale: WO 2010/049638

(56) Documents cités:
- DE-A1- 10 313 067
- DE-U1- 20 320 918
- US-A1- 2004 130 019

## Description

La présente invention concerne les vitrages de véhicules, et en particulier les vitrages à diodes électroluminescentes, et le procédé de fabrication de tels vitrages.

De plus en plus de véhicules font appel aux diodes électroluminescentes (LED en anglais ou DEL en français).

Le document DE 103 13 067 A1 décrit un module à diodes électroluminescentes pour véhicule comportant un vitrage et un profilé support de diodes.

Le document US 2004/0130019 A1 décrit un module à diodes électroluminescentes comportant des moyens d'étanchéité au(x) fluide(s) pour les diodes.

Le document DE 203 20 918 U1 décrit une encapsulation polymérique d'un module à diodes électroluminescentes pour véhicule comportant un vitrage.

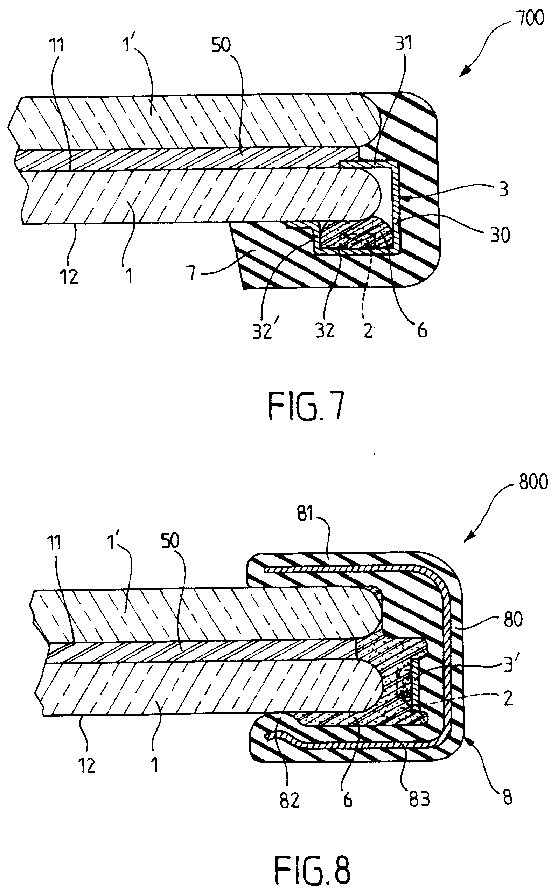

Le document WO2006128941 propose par exemple un toit panoramique à éclairage homogène sur la surface par diode(s) électroluminescente(s). Ce toit comporte une structure feuilletée qui, comme montrée en figure 8, est composée d'une feuille externe extractrice de lumière, d'une feuille centrale transparente de guidage de lumière, et d'une feuille interne de diffusion de la lumière. La source de lumière est une pluralité de diodes électroluminescentes montées sur un support latéral fixé à la tranche des feuilles interne et externe tandis qu'un trou est pratiqué dans la feuille centrale pour loger les diodes.

Le toit panoramique est fixé par collage des bords périphériques de la feuille externe à la carrosserie du toit. Les diodes et la zone de collage périphérique sont masquées par la garniture interne.

L'invention se propose d'élargir la gamme des vitrages éclairants disponibles.

La présente invention vise en effet un module à diodes électroluminescentes convenant notamment pour toute configuration de toit, et particulièrement les toits montés par l'extérieur au toit de carrosserie, toits ouvrants ou fixes.

Pour cela, le module à LED doit être durable, compact, avec des diodes fixées de manière robuste tout en restant simple.

La présente invention vise aussi un module à diodes satisfaisant aux exigences industrielles (en termes de rendement, donc de coût, de cadence, d'automatisation...), rendant ainsi possible une production « bas coût » sans sacrifier les performances.

A cet effet, la présente invention propose un module à diodes électroluminescentes pour véhicule comportant :
- un vitrage avec des faces principales, le vitrage comportant au moins une première feuille transparente présentant une première face principale et une deuxième face principale et une tranche,
- des diodes électroluminescentes comportant chacune une puce émettrice apte à émettre un ou plusieurs rayonnements dans le visible guidé(s) dans la première feuille, avant extraction via l'une au moins des première et/ou deuxième faces,
- un profilé support des diodes s'étendant en bordure du vitrage et fixé au vitrage (notamment à la première feuille),
- des moyens d'étanchéité au(x) fluide(s) aptes à protéger les puces (à tout la moins la face émettrice des puces) et l'espace des rayonnements émis avant injection dans la première feuille (ou espace de couplage optique), injection de préférence par la tranche de la première feuille.

Ainsi la présente invention propose un module à LED durable, même lorsque le module n'est pas protégé par la carrosserie, ceci grâce aux moyens d'étanchéité simples et adaptés, supprimant des chemins de diffusion de fluide(s) (aux éventuels trous de passage de la connectique électrique si nécessaire).

Les moyens d'étanchéité selon l'invention peuvent être utiles à plusieurs niveaux :
- au moment de la fabrication du module, notamment d'une l'encapsulation,
- à long terme, par exemple 5 ans, en particulier pour une protection contre l'humidité des puces (l'eau liquide, vapeur), éviter une pollution de l'espace des rayonnements émis (salissures, pollution organique, type moisissures...) et de préférence aux produits de nettoyage, ou à un lavage par jet à haute pression.

Pour qualifier l'étanchéité à long terme on peut recourir au test cataplasme humide. Par exemple la norme D47 1165-H7 utilisée dans l'automobile décrit le test de cataplasme humide H7.

Ce test consiste à noyer la pièce à tester dans du coton imbibé d'eau déminéralisée et à enfermer le tout dans un sac hermétique, puis à le placer en étuve à 65°C pendant 7 jours. Ensuite les pièces sont sorties, débarrassées du coton trempé et placées à 20°C pendant 2 heures. Les pièces peuvent enfin être observées et testées mécaniquement ou fonctionnellement pour évaluer l'effet de l'humidité sur le système. Ce test correspond à plusieurs années de vieillissement naturel en milieu humide et chaud.

On peut aussi utiliser un test de nettoyage par jet d'eau haute pression, comme le test de résistance au lavage par nettoyeur haute pression D25 5376 utilisé dans l'automobile : pression jusqu'à 100 bars avec une distance buse/caisse jusque 100 mm.

Le support des diodes présente une surface porteuse des puces, « en regard » du vitrage, généralement en regard de la tranche de la première feuille ou (en partie) en regard d'une face principale du vitrage et dépassant du bord de la première feuille dans le cas de diodes à émission latérale.

Les moyens d'étanchéité au(x) fluide(s) peuvent être choisis parmi :
- un adhésif, dit extérieur éventuellement placé sur la surface du support des diodes qui est opposée à la surface en regard du vitrage porteuse des puces et dépassant sur la périphérie du vitrage, l'adhésif formant éventuellement tout ou partie des moyens de fixation du support au vitrage, l'adhésif ayant éventuellement une âme rigide dépassante non recouverte,
- bande(s) adhésive(s), éventuellement une bande enveloppante avec une partie couvrante sur le support prolongé par les parties débordantes,
- ruban(s) de colle ou un ruban enveloppant,
- et/ou des moyens d'étanchéité entre le vitrage et le profilé support de diodes, choisis parmi :
   - une matière adhésive de remplissage de l'espace des rayonnements émis transparente au(x)dit(s) rayonnement(s), de préférence une colle, une résine thermoplastique, un adhésif double face,
   - ou une matière adhésive de protection de l'espace des rayonnements émis qui est agencée au niveau des zones de contact du support au vitrage, transparente au(x)dit(s) rayonnement(s) des diodes si en partie dans l'espace de couplage, et/ou disposée pour sceller les parties libres du support à diodes (par les côtés par exemple autrement dit scellage latéral de l'espace de couplage),
   - et une matière de protection des puces transparente au(x)dit(s) rayonnement(s), identique à la matière de remplissage ou distincte notamment une matière de pré-encapsulation des puces.

Dans un mode de réalisation, la matière adhésive de protection des puces transparente au(x)dit(s) rayonnement(s) est identique à la matière de remplissage et est choisie parmi :
- un adhésif, noyant les puces et fixant les puces au vitrage,
- ou un adhésif double face, collé sur les puces et le support par une face adhésive et collé au vitrage par l'autre face adhésive formant tout ou partie des moyens de fixation du support.

L'espace des rayonnements émis (espace de couplage) varie naturellement en fonction du diagramme de rayonnement des puces, défini par une direction principale d'émission et un cône d'émission.

Pour une simplicité de fabrication (indépendante du diagramme de rayonnement), l'espace complet entre la tranche et les puces (pré-encapsulées ou non, et éventuellement délimité par une ou des ailles du support, est rempli par la matière adhésive.

Dans une première configuration, le module comprend une encapsulation polymérique, notamment épaisse de 0,5 mm à plusieurs cm, située en bordure du vitrage et recouvrant le support de fixation (par la surface opposée à la surface porteuse des diodes et/ou par la tranche du support, ou, plus généralement, par toute surface libre du support en dehors de l'espace de couplage optique), les moyens d'étanchéité au(x) fluide(s) étant alors choisis (au moins) étanches (donc suffisamment résistants) à la matière d'encapsulation liquide injectée à une température et une pression donnée.

Dans les applications de véhicules, la matière d'encapsulation est noire ou colorée (pour des fins esthétiques et/ou de masquage). Cette matière n'étant pas suffisamment transparente au(x) rayonnement(s) visible(s), l'étanchéité est nécessaire pour assurer une bonne injection de la lumière dans la première feuille.

L'encapsulation peut être en polyuréthane, notamment en PU-RIM (reaction in mold en anglais), la réticulation du PU bicomposant opérant dans le moule, une fois les deux composants injectés simultanément. Cette matière est typiquement injectée jusqu'à 130°C et quelques dizaines de bars.

D'autres matières d'encapsulation sont :
- de préférence les thermoplastiques souples : thermoplastique élastomère (TPE), polyvinyle chlore (PVC), terpolymère éthylène-propylène-diène (EPDM), typiquement injectés entre 160°C et 240°C et jusqu'à 100 bars,
- les thermoplastiques rigides : polycarbonate (PC), polyméthacrylate de méthyle (PMMA), polyéthylène (PE), polypropylène (PP), polyamide (PA66), acrylonitrile butadiène styrène (ABS), ABSPC, typiquement injectés entre 280°C et 340°C et entre 500 et 600 bars.

On se place de préférence à une température inférieure à la température de jonction des connectiques des puces (soudure etc) par exemple inférieure à 250°C voire à inférieure à ou égale à 200°C. Pour qualifier l'étanchéité à cette matière injectée, on pourrait comparer les performances optiques avant et après encapsulation.

Comme matières adhésives (externes ou internes) remplissant cette fonction d'étanchéité à court terme à l'encapsulation, on peut citer :
- colle réticulable aux UV (interne ou externe),
- une bande (acrylique, PU..) adhésivée avec colle acrylique (interne ou externe),
- une colle transparente (interne ou externe), PU, silicone, acrylique,
- une résine thermoplastique (interne ou externe) : polyvinyl butyral (PVB), copolymère éthylène/acétate de vinyle (EVA) ...

L'encapsulation s'étend le long de la tranche de la première feuille et d'au moins un bord de la première face principale. En entourant ledit espace de couplage (et le plus souvent les diodes et le support de diodes par les surfaces libres hors espace de couplage), l'encapsulation peut former quant à elle des moyens d'étanchéité additionnels au(x) fluide(s) dudit espace de couplage. par exemple plus efficaces à long terme et éventuellement renforcés par l'intermédiaire d'une couche de primaire, mono, bi ou tri-composants, par exemple à base de polyuréthane, polyester, polyvinyle acétate, isocyanate ..., épaisse de 5 à 30 µm, entre l'encapsulation et le vitrage, en particulier vitrage en verre minéral, car la couche favorise l'adhésion à un verre minéral.

En outre, dans le cas d'une encapsulation sur verre minéral, on peut préférer proscrire les colles silicone comme adhésif externe, car elles adhèrent très bien au verre mais vont empêcher l'adhésion de la matière encapsulée sur le verre.

L'encapsulation apporte également une bonne finition esthétique et permet d'intégrer d'autres éléments ou fonctions :
- surmoulage de cadres,
- inserts de renforcement ou inserts de fixation du module, notamment pour les modules ouvrants,
- profil d'étanchéité à lèvres multiples (double, triple ...), s'écrasant après montage sur le véhicule.

L'encapsulation peut être de toute forme, avec ou sans lèvre, biface, triface.

Un tubing, autrement dit un profil d'étanchéité à cellules fermées, peut aussi être accolé à l'encapsulation.

De préférence, dans le cas d'un adhésif externe, on laisse un espace libre sur la tranche du vitrage associée au support à diodes pour permettre une encapsulation flush, c'est-à-dire affleurante à une des faces du vitrage ...

Dans une deuxième configuration de réalisation, le module comprend un joint polymérique prémonté, par exemple en élastomère, notamment en TPE (pour thermoplastique élastomère), ou EPDM, épais de quelques mm (typiquement entre 2 et 15 mm),. Le joint peut former éventuellement le profilé support de fixation au vitrage (les diodes pouvant être en outre sur une embase ajoutée), ou le joint recouvrant tout ou partie du profilé support des diodes.

Le joint s'étend le long de la tranche de la première feuille et sur la périphérie des faces principales du vitrage (première feuille et éventuelle deuxième feuille). Il peut être adhésivé pour son maintien. Le joint en U peut plus préférablement tenir simplement par pincement ou par chaussage des deux faces principales du vitrage qui sont la première et deuxième face de la première feuille dans le cas d'un vitrage simple.

Le joint peut être de toute forme : en L (extension sur la première face principale, en U (extension sur la première face principale et par exemple sur la deuxième face principale)...

Le joint peut porter les diodes et l'embase ou barrette portant les diodes (de section rectangulaire par exemple). Le joint (associé à l'embase) peut former ici le support de fixation au vitrage.

Le joint peut comprendre une âme métallique.

Le joint peut être démontable à tout moment notamment en l'absence d'adhésif entre le joint et les diodes (dans l'espace de coupalge. En entourant l'espace, il peut néanmoins former lesdits moyens d'étanchéité au(x) fluide(s) dudit espace (et des diodes), efficaces à long terme par une ou plusieurs de lèvres du joint en élastomère mises en contrainte après fixation agencées sur les faces principales du vitrage.

L'élastomère, notamment EPDM, a une fonction d'étanchéité et de bonnes propriétés de rémanence en compression.

Cependant pour un bon positionnement du support et des diodes, les moyens d'étanchéité au(x) fluide(s) dudit espace utilisés peuvent être de préférence entre le joint (sans lèvre d'étanchéité) et la périphérie du vitrage.

Le support peut être fixé au vitrage avant montage du joint, le joint est alors ensuite monté par tous les moyens existants (pincement du support en U, collage par le biais d'un adhésif double face...).

Le joint avec les diodes peut être de préférence monté en une opération d'assemblage, avec un seul mouvement de translation (par pincement, chaussage ...).

Comme moyens d'étanchéité efficaces à long terme pour l'humidité et/ou le nettoyage :
- on évite le polyvinyl butyral (PVB), le copolymère éthylène/acétate de vinyle (EVA),
- on préfère un adhésif double face (transparent si en interne), simple face (en externe), une colle (transparente si en interne).

L'adhésif externe peut être une bande adhésivée :
- monolithique, commune à l'ensemble des diodes,
- ou par morceaux, par diodes ou groupe(s) de diodes.

Par exemple, on choisit une bande d'épaisseur 0,5 mm, en acrylique.

La bande (de toute forme possible) est fixée en périphérie du vitrage, par la tranche du vitrage et/ou par une ou plusieurs faces principales du vitrage.

La bande dite alors enveloppante, peut recouvrir entièrement le support par des parties inférieures et supérieures et des parties latérales. En somme, la bande est de dimensions (largeur et longueur) supérieures aux dimensions de la partie émergente du support de diode.

La bande peut aussi recouvrir uniquement le support par des parties inférieures et supérieures et non les parties latérales (ou côtés) du profilé support. Pour faciliter le passage de la connectique, on peut faire des trous traversants dans la bande.

D'une manière générale, les parties latérales (ou côtés) du profilé support sont rendues étanches au(x) fluide(s) (d'encapsulation et/ou à long terme) par des moyens « localisés » adhésifs tels que ceux déjà décrits : colle, résine etc.

Si la connectique passe entre le support et le vitrage, on peut faire des trous traversants dans l'adhésif.

La bande adhésive peut comporter une âme rigide (métallique...) dépassant du bord de bande et non recouverte, pour faciliter l'arrachement de la bande au moment de la réparation du véhicule ou du changement des diodes...

Pour quantifier la transparence au(x) rayonnements(s) des moyens d'étanchéité internes, on peut de préférence choisir des matériaux avec un coefficient d'absorption inférieur ou égal à 25 m⁻¹, encore plus préférentiellement inférieur ou égal 5 m⁻¹.

Par ailleurs, pour minimiser les pertes à l'interface avec la première feuille, on peut choisir en outre un indice optique le plus proche de celui de la première feuille, par exemple un delta d'indice inférieur ou égale à 0,3 voire à 0,1.

On peut prévoir de préférence pour le ou les bords de couplage de la première feuille des bords arrondis. En particulier dans le cas où l'espace des rayonnement émis est de l'air, il est possible de tirer partir de la réfraction au niveau de l'interface air/première feuille de géométrie appropriée (bord arrondi, voire même biseauté..) permettant ainsi de focaliser les rayons dans la première feuille.

On peut prévoir de préférence pour le ou les bords de couplage de la première feuille des bords dépolis (diffusants). Dans ce cas, les pertes par diffusion sont limitées grâces au moyen d'étanchéité internes adhésifs car l'adhésif vient s'intégrer dans les infractuosités du bord dépoli.

De préférence, le facteur de transmission de la première feuille autour du pic du rayonnement dans le visible des puces (perpendiculairement aux faces principales) est supérieur ou égal à 50%, encore plus préférentiellement supérieur ou égal à 70%, et même supérieur ou égal à 80%.

Le support peut comporter une partie latérale en regard de la tranche de la première feuille et porteuse des puces.

Le vitrage peut avoir une couche dite protectrice (une feuille, un film, un dépôt...) au moins en bordure de l'une des première ou deuxième faces ou s'étendant sur ladite face. Cette couche peut avoir une fonction double :
- extraction de lumière (par exemple film souple en PU, PE, silicone éventuellement collé par acrylique),
- protection aux rayonnements (IR, UV) : contrôle solaire, basse émissivité...,
- anti rayures,
- esthétique (teintée, avec motifs etc).

Cette couche protectrice peut être :
- une couche transparente au(x) rayonnement(s) des puces, dépassant en s'étendant sur la tranche entre la partie latérale du support et la tranche, remplissant l'espace des rayonnements émis et/ou noyant lesdites puces (de préférence non pré-encapsulées),
- ou une couche (indifféremment transparente, opaque...) dépassant avec une partie rabattue recouvrant la partie latérale formant ainsi l'adhésif externe voire enveloppant et/ou portant ledit support.

La couche dépassante peut même former un entourage complet jusqu'à l'autre des première ou deuxième faces, formant ainsi l'adhésif externe enveloppant.

La partie rabattue peut même porter la partie latérale (type embase etc). La face externe de la partie latérale peut à cet effet, être munie des moyens d'ancrage (picots etc).

La couche protectrice peut être un matériau ramolli par chauffage pour devenir adhésif (PVB par exemple) ou en un matériau avec des faces adhésives (matériau adhésivé) comme le PE, PU, PET.

Le vitrage peut être simple (une seule feuille,), la première feuille étant en verre ou en plastique, notamment en PC, etc...

Le vitrage peut être feuilleté (plusieurs feuilles) formé :
- d'une première feuille transparente, verre minéral (flotté etc) ou organique (PC, PMMA, PU, résine ionomère, polyoléfine), épaisse ou mince,
- d'un intercalaire de feuilletage en matériau de feuilletage donné,
- d'une deuxième feuille (opaque ou non, transparente, teintée, en verre minéral, ou organique à fonctionnalités diverses : contrôle solaire..).

Comme intercalaire de feuilletage usuel, on peut citer le PU utilisé souple, un thermoplastique sans plastifiant tel que le copolymère éthylène/acétate de vinyle (EVA), le polyvinylbutyral (PVB). Ces plastiques ont par exemple une épaisseur entre 0,2 mm et 1,1 mm, notamment 0,38 et 0,76 mm.

On peut notamment choisir comme première feuille / intercalaire / deuxième feuille :
- verre minéral / intercalaire / verre minéral,
- verre minéral / intercalaire / polycarbonate,
- polycarbonate (épais ou non) / intercalaire / verre minéral.

Dans la présente description, en l'absence de précision, on entend par verre, un verre minéral.

On peut découper le bord de la première feuille (avant trempage) d'un vitrage simple ou feuilleté pour y loger les diodes.

La structure peut comprendre un vitrage feuilleté formé de la première feuille de verre, d'un intercalaire de feuilletage choisi diffusant, par exemple un PVB translucide pour répartir la lumière, et d'une deuxième feuille de verre éventuellement avec une face externe principale diffusante (par texturation ou par couche additionnelle).

Dans un mode de réalisation avec le vitrage feuilleté et de préférence une encapsulation telle que précitée, la première feuille comprend un évidement pour loger les diodes et débouchant sur les première et deuxième face principales, le profilé support, de préférence une barrette rectangulaire, est contre, de préférence collé, la périphérie de la face de feuilletage de la deuxième feuille de façon à supprimer la lumière parasite dans la deuxième feuille lorsque l'encapsulation éventuelle est affleurante (ou flush) sur la face de la deuxième feuille opposée à la face de feuilletage.

Toutefois, de préférence, le vitrage est simple, voire en plastique, pour gagner en compacité et/ou en légèreté.

Les premières et/ou deuxième feuilles peuvent être de toute forme (rectangulaire, carré, rond, ovale,...), et être planes ou galbées.

La première feuille peut être préférentiellement en verre sodocalcique, par exemple en verre PLANILUX de la société SAINT GOBAIN GLASS.

La deuxième feuille peut être colorée par exemple en verre VENUS de la société SAINT GOBAIN GLASS.

Le verre peut avoir éventuellement préalablement subi un traitement thermique du type durcissement, recuit, trempe, bombage.

La face d'extraction du verre peut aussi être matée, sablée, sérigraphiée etc.

Dans la configuration avec la couche protectrice, le support comporte une aile sur la face de la première feuille en contact avec la couche protectrice, l'aile étant discontinue pour le remplissage par ladite couche protectrice de l'espace des rayonnements émis et/ou des puces, et de préférence des zones saillantes d'ancrage dans ladite couche protectrice.

Au moment de la fabrication, on prévoit une couche dépassante, prépliée, et une découpe adaptée de cette couche côté support (découpe de forme complémentaire à la forme de l'aile du support, notamment zones pleines pour venir remplir l'espace de couplage et/ou noyer les puces).

Naturellement, le support peut alternativement comporter une aile associée à la face supérieure de la couche protectrice ou d'une deuxième feuille auquel cas, la forme de cette aile n'est pas à ajuster.

Les zones d'ancrage sont plutôt de forme triangulaire ou en tout cas pointues et étroites.

Le support peut comporter en outre une partie inférieure associée à la face inférieure de la première feuille. Cette partie peut être pleine ou avec des parties évidées.

La largeur maximale de la partie inférieure, est éventuellement supérieure à la largeur maximale de partie supérieure, notamment supérieure ou égale (car pas de contraintes de feuilletage).

La longueur de la deuxième aile peut varier de 3 à 30 mm. La longueur des zones d'ancrage peut varier de 3 à 10 mm en particulier dans le cas où elles viennent s'ancrer dans une feuille de thermoplastique.

Par ailleurs, la tranche, le coin ou le bord de l'une des faces de la première feuille, peut comporter un évidement où sont placées les puces, notamment une rainure logeant les puces.

La première feuille peut comporter des évidements à forts rayons de courbure pour le verre.

L'évidement peut être une rainure latérale, le long de la tranche, éventuellement débouchante sur au moins un côté pour faciliter le montage.

Pour davantage de compacité et/ou pour réduire ou augmenter la zone de clair de vitre, la distance puce et première feuille peut être inférieure à 2 mm.

Notamment, on peut utiliser des puces de largeur 1 mm, de longueur 2,8 mm, de hauteur 1,5 mm.

Le support peut être en périphérie de bord(s) du module, sur la tranche de la première feuille et/ou sur la face inférieure de la première feuille et/ou sur la face supérieure de la première feuille).

Le support peut être de longueur (et/ou respectivement largeur) inférieure à la longueur (respectivement largeur) du bord de couplage de la première feuille.

Le support peut être perforé pour qu'une colle adhésive externe noie les puces et/ou l'espace de couplage optique.

Le support peut être en matériau souple, diélectrique ou électroconducteur, par exemple métallique (aluminium etc), être composite.

Le support est naturellement en matériau étanche au(x) fluide(s) (matière d'injection et/ou à long terme), sauf si cette fonction peut être réalisée par un autre élément extérieur l'enveloppant (adhésif externe, joint prémonté...).

Le support peut être monolithique ou en plusieurs pièces.

Le support peut être réalisé par pliage.

On préfère un support de conception simple (de section variable ou non, en L, en U, en E voire une simple barrette rectangulaire), robuste, facile à monter.

On peut pratiquer des encoches dans le vitrage pour favoriser la fixation (clipsage ...).

Le support peut avoir une section (locale) en L :
- au moins une partie latérale (sensiblement plane) en regard de la tranche du vitrage, de préférence porteuse des diodes,
- prolongée par une aile en regard d'une face principale du vitrage (et en périphérie),

Le support peut avoir une section (locale) en U et comporter :
- au moins une partie latérale (sensiblement plane) en regard de la tranche du vitrage, de préférence porteuse des diodes,
- prolongée par une aile en regard d'une face principale du vitrage (et en périphérie),
- et prolongée par une autre aile en regard d'une autre face principale du vitrage (et en périphérie).

Le nombre total de diodes est défini par la taille et la localisation des zones à éclairer, par l'intensité lumineuse souhaitée et l'homogénéité de lumière requise.

La longueur du support varie en fonction du nombre de diodes et de l'étendue de la surface à éclairer, notamment de 25 mm à la longueur du bord de couplage optique (par exemple 1 m).

Le support étant de préférence maintenu (au moins en partie) par pincement sur le vitrage ou par chaussage, de préférence pincement ou chaussage de la première feuille.

Pour davantage de compacité et/ou une conception simplifiée, le support peut présenter en outre l'une ou les caractéristiques suivantes :
- être mince, notamment d'épaisseur inférieure ou égale à 3 mm, par exemple entre 0,1 et 3 mm, ou inférieur à l'épaisseur d'un intercalaire de feuilletage le cas échéant,
- être opaque, par exemple en cuivre ou en inox,
- s'étendre tout le long d'un trou formant une rainure.

On peut prévoir plusieurs supports à diodes identiques ou similaires au lieu d'un seul support notamment si les zones à éclairer sont très distantes entre elles.

On peut prévoir un support avec une taille de référence donnée multiplié en fonction de la taille du vitrage et des besoins

Pour davantage de compacité et/ou pour augmenter la zone de clair de vitre, la distance entre la partie porteuse des puces et la première feuille est de préférence inférieure ou égale à 5 mm, et/ou de préférence la distance entre les puces et la première feuille est inférieure ou égale à 2 mm. Notamment on peut utiliser des puces de largeur 1 mm, de longueur 2,8 mm, de hauteur 1,5 mm.

L'invention couvre aussi le profilé support de diodes (avec les diodes de préférence) pour fixation sur un module de véhicule tel que décrit dans les modes de réalisation précédents.

L'invention couvre aussi le profilé support de diodes de section locale en U ou en L pour fixation sur un bord de vitrage de véhicule, comportant une partie médiane (prévue pour porter des diodes) prolongée par une aile discontinue avec des zones évidées et éventuellement des zones saillantes pour ancrage dans une couche sur le vitrage.

L'invention couvre aussi un joint de prémontage pour ledit module à diodes de véhicule muni d'un support à diodes (par exemple de section locale en U, en L, ou une simple barrette rectangulaire) et de zones de fixation du joint par pincement ou chaussage (clipsage ...) sur un vitrage.

L'invention couvre aussi un joint de prémontage pour ledit module à diodes de véhicule, en élastomère, et avec une ou plusieurs lèvres d'étanchéité au(x) fluide(s).

Les diodes peuvent être (pré)assemblées sur une embase ou des embases (avec des pistes d'alimentation électrique) de préférence minces notamment d'épaisseur inférieure ou égale à 1 mm, voire 0,1 mm, lesquelles sont fixées aux supports (métalliques par exemple).

Sinon le support lui-même peut porter directement les puces et des pistes d'alimentation électrique.

Le module est destiné à équiper tout véhicule :
- vitres latérales, toit, lunette arrière, pare-brise d'un véhicule terrestre : automobile, véhicule utilitaire, camion, train
- hublot, pare brise d'un véhicule aérien (avion..),
- vitres de fenêtre, toit, d'un véhicule aquatique (bateau, sous-marin).

On ajuste l'extraction des rayonnements (le type et/ou la position de puces) pour :
- un éclairage d'ambiance, de lecture, notamment visible à l'intérieur du véhicule,
- une signalisation lumineuse notamment visible à l'extérieur :
   - par activation de télécommande : détection du véhicule dans un parking ou autre, indicateur de (dé)verrouillage de portes, ou
   - signalisation de sécurité, par exemple comme feux stop sur l'arrière,
- un éclairage sensiblement homogène sur toute la surface d'extraction (une ou plusieurs zones d'extraction, fonction commune ou distincte).

La lumière peut être :
- continue et/ou par intermittence,
- monochromatique et/ou plurichromatique, blanche.

Visible à l'intérieur du véhicule, elle peut ainsi avoir une fonction d'éclairage de nuit ou d'affichage d'informations de toutes natures, de type dessin, logo, signalisation alphanumérique ou autres signalétiques.

Comme motifs décoratifs, on peut former une ou des bandes lumineuses, un cadre lumineux périphérique.

On peut réaliser une seule face d'extraction (interne au véhicule de préférence).

L'insertion de diodes dans ces vitrages permet d'autres fonctionnalités de signalisation suivantes :
- affichage de témoins lumineux de signalisation destinés au chauffeur du véhicule ou aux passagers (exemple : témoin d'alarme de température du moteur dans le pare-brise automobile, témoin de mise en fonctionnement du système de dégivrage électrique, des vitres...),
- affichage de témoins lumineux de signalisation destinés aux personnes à l'extérieur du véhicule (exemple : témoin de mise en fonctionnement de l'alarme du véhicule dans les vitres latérales),
- affichage lumineux sur les vitrages des véhicules (par exemple affichage lumineux clignotant sur les véhicules de secours, affichage de sécurité avec faible consommation électrique signalant la présence d'un véhicule en danger).

Le module peut comprendre une diode réceptrice de signaux de commande, notamment dans l'infrarouge, pour télécommander les diodes.

Naturellement l'invention porte aussi sur un véhicule incorporant le module défini précédemment.

Les diodes peuvent être de simples puces semi-conductrices par exemple de taille de l'ordre de la centaine de µm ou du mm.

Les diodes peuvent toutefois comprendre une enveloppe protectrice (provisoire ou non) pour protéger la puce lors de manipulations ou pour améliorer la compatibilité entre les matériaux de la puce et d'autres matériaux.

Les diodes peuvent être encapsulées, c'est-à-dire comprenant une puce semi-conductrice et une enveloppe, par exemple en résine type époxy ou en PMMA, encapsulant la puce et dont les fonctions sont multiples : protection de l'oxydation et de l'humidité, élément diffusant ou de focalisation, conversion de longueur d'onde, ....

La diode peut être choisie notamment parmi au moins l'une des diodes électroluminescentes suivantes :
- une diode avec des contacts électriques sur les faces opposées de la puce ou sur une même face de la puce,
- une diode à émission latérale, c'est-à-dire parallèlement aux (faces de) contacts électriques, avec une face émettrice latérale par rapport au support,
- une diode dont la direction principale d'émission est perpendiculaire ou oblique par rapport la face émettrice de la puce,
- une diode présentant deux directions principales d'émission obliques par rapport à la face émettrice de la puce donnant une forme d'aile de chauve-souris (« batwing » en anglais), les deux directions étant par exemple centrées sur des angles entre 20° et 40° et entre -20° et -40° avec des demi-angles au sommet de l'ordre de 10° à 20°,
- une diode présentant (uniquement) deux directions principales d'émission obliques par rapport à la surface émettrice de la diode, centrées par exemple sur des angles entre 60° et 85° et entre -60° et -85° avec des demi-angles au sommet de l'ordre de 10° à 30°,
- une diode disposée pour un guidage dans la tranche ou pour émettre directement par l'une ou les faces, ou par le trou (diode alors dite inversée).

Dans une configuration, les diodes sont à émission latérale, les faces émettrices étant en regard de la tranche de la première feuille et les diodes agencées sur le profilé support de fixation, de préférence une barrette rectangulaire, contre et/ou collé à l'une des faces principales du vitrage de préférence par un adhésif double face.

Le diagramme d'émission d'une source peut être lambertien.

Typiquement, une diode collimatée présente un demi-angle au sommet pouvant descendre jusqu'à 2 ou 3°.

Le module peut ainsi intégrer toutes fonctionnalités connues dans le domaine du vitrage. Parmi les fonctionnalités rajoutées sur le vitrage, on peut citer : couche hydrophobe/oléophobe, hydrophile/oléophile, photocatalytique antisalissure, empilement réfléchissant le rayonnement thermique (contrôle solaire) ou infra rouge (bas-émissif), antireflet.

La structure peut comprendre avantageusement une couche diffusante minérale associée à l'une des faces principales qui est une face lumineuse (par extraction du rayonnement).

La couche diffusante peut être composée d'éléments contenant des particules et un liant, le liant permettant d'agglomérer entre elles les particules.

Les particules peuvent être métalliques ou des oxydes métalliques, la taille des particules peut être comprise entre 50 nm et 1 µm, de préférence le liant peut être minéral pour une résistance à la chaleur.

Dans un mode de réalisation préféré, la couche diffusante est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante d'environ 10 µm.

L'invention vise enfin un procédé de fabrication du module à diodes pour véhicule tel que défini précédemment comprenant les étapes suivantes :
- la fourniture d'un vitrage comportant la première feuille transparente, ladite couche protectrice adhésive dépassant du bord de la première feuille,
- la fourniture du support à diodes comportant une partie latérale à mettre en regard de la tranche de la première feuille et portant les puces,
et l'une des étapes suivantes :
- pour son adhésion, le ramollissement de la partie dépassante dite interne de la couche (par chauffage du support rapporté et/ou du vitrage) sur la tranche de la première feuille, la mise en place du support contre la partie dépassante ramollie qui remplit l'espace des rayonnements émis et/ou noie les puces,
- ou pour son adhésion, le ramollissement de la partie dépassante dite externe d'une couche (par chauffage du support et/ou du vitrage), sur le support déjà fixé, et de préférence enveloppant le support et adhérant à la deuxième face,
- ou le rabattement de la partie dépassante dite externe d'une couche protectrice à face adhésivée sur le support et de préférence enveloppant le support et adhérant à la deuxième face,
et de préférence l'injection de la matière d'encapsulation sur le bord du vitrage avec les diodes.

L'invention vise aussi un procédé de fabrication du module à diodes tel que défini précédemment comprenant les étapes suivantes :
- la fourniture d'un vitrage comportant au moins la première feuille transparente,
- la fourniture du profilé support des diodes,
- la fixation du profilé support des diodes au vitrage
- la fourniture d'un adhésif dit extérieur, sur la périphérie du vitrage et entourant ledit espace et, notamment bande(s) adhésive(s) ou ruban(s) de colle,
- l'injection de la matière d'encapsulation polymérique, de préférence à une température inférieure ou égale à 250°C, voire à 200°C, sur le bord du vitrage avec les diodes en entourant ledit espace et ledit adhésif extérieur qui forme alors des moyens d'étanchéité à la matière d'encapsulation dans ledit espace.

L'invention vise aussi un procédé de fabrication du module à diodes tel que défini précédemment comprenant les étapes suivantes :
- la fourniture d'un vitrage comportant au moins la première feuille transparente,
- la fourniture du profilé support des diodes,
- la fixation du profilé support des diodes au vitrage par une matière adhésive remplissant ledit espace et éventuellement noyant les diodes, (pour rendre étanche l'espace des rayonnements émis par les puces lors d'une injection), la fixation étant éventuellement précédée d'un prépositionnement du support par un adhésif en périphérie d'une des faces du vitrage,
   - l'injection de la matière d'encapsulation polymérique, de préférence à une température inférieure ou égale à 250°C, voire à 200°C, sur le bord du vitrage avec les diodes en entourant ledit espace et les moyens adhésifs formant des moyens d'étanchéité à la matière d'encapsulation dans ledit espace.

On peut aussi prévoir :
- la fourniture d'un joint prémonté, porteur sur sa face interne des puces noyées d'une matière adhésive, éventuellement ramollie par chauffage (pour être rendue adhésive et/ou pour épouser au mieux la tranche),
- montage par pincement ou chaussage (ou clipsage) du joint sur la tranche du vitrage jusqu'à contact de la matière adhésive avec la tranche,
ou encore :
- la fourniture d'un support de fixation des diodes de section en U en L éventuellement variable, avec des puces noyées d'une matière adhésive, éventuellement ramollie (pour être rendue adhésive et/ou pour épouser au mieux la tranche),
- le montage par pincement ou chaussage (ou clipsage) du support sur la tranche du vitrage jusqu'à contact de la matière adhésive avec la tranche.

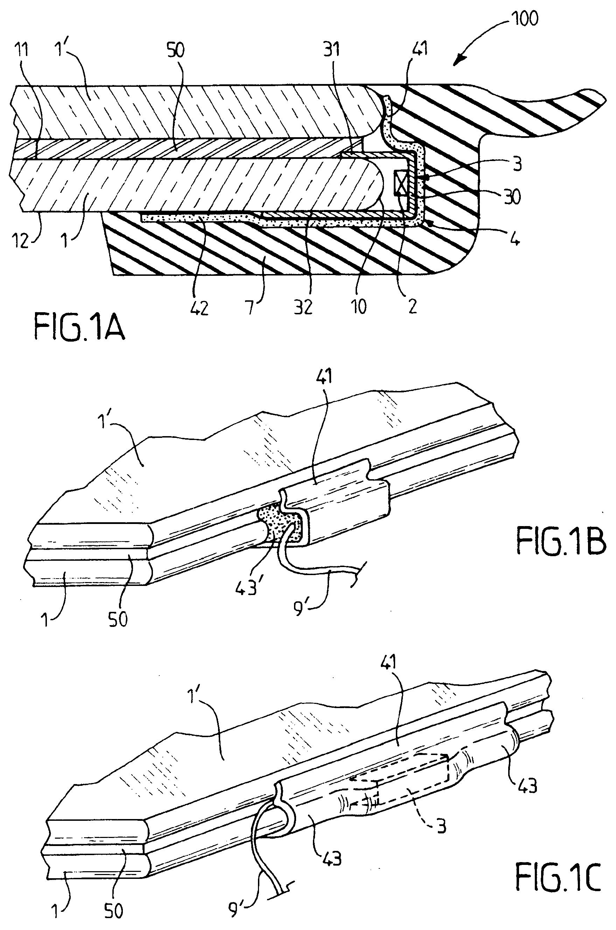

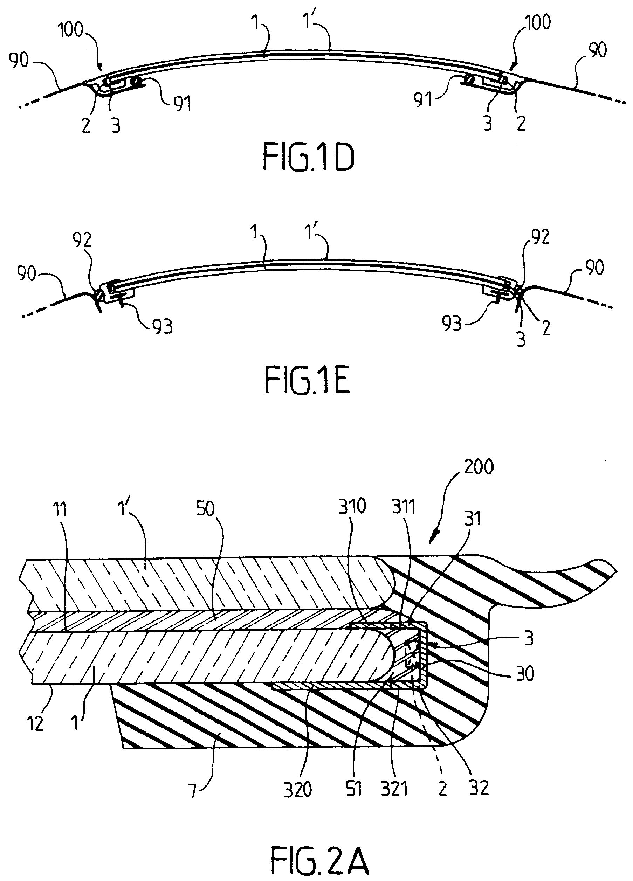

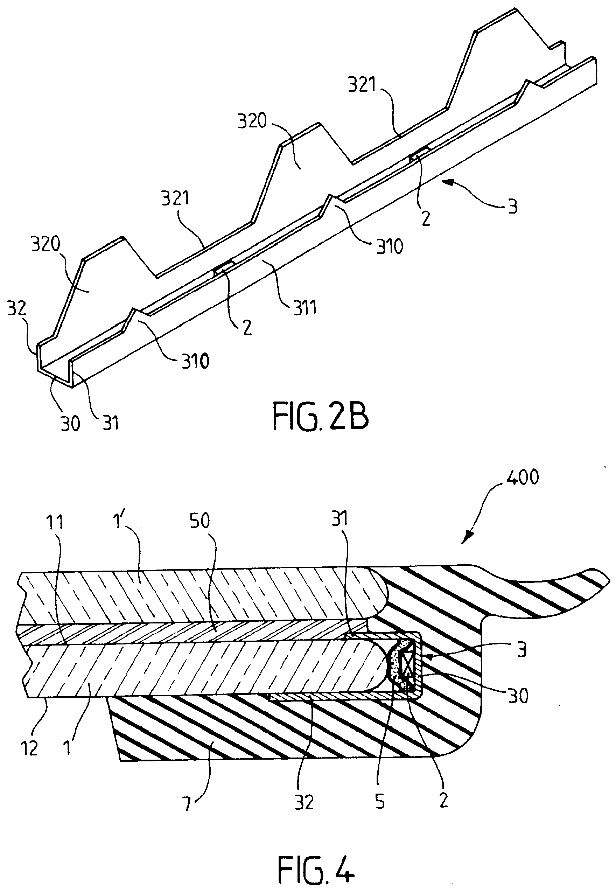

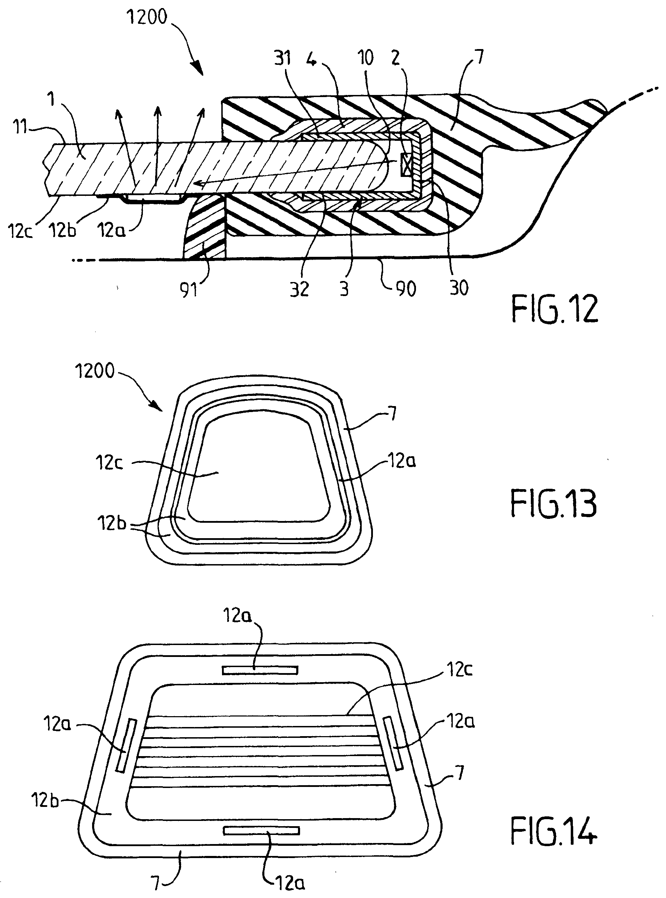

D'autres détails et caractéristiques avantageuses de l'invention apparaissent à la lecture des exemples de modules selon l'invention illustrés par les figures suivantes :
▪ Les figures 1A, 2A, 2C, 3 à 12 , 15 et 16 représentent des vues schématiques partielles de coupe des modules à diodes dans différents modes de réalisation de l'invention,
▪ Les figures 1B, 1C représentent des vues schématiques partielles de côté d'un module à diodes dans un mode de réalisation de l'invention,
▪ Les figures 1D, 1E représentent des vues schématiques partielles de coupe d'un toit automobile avec un module à diodes selon l'invention,
▪ La figure 2B représente une vue schématique de côté d'un support de fixation à diodes selon l'invention,
▪ Les figures 13 et 14 représentent respectivement une vue schématique partielle de dessus de modules à diodes dans des modes de réalisation de l'invention.

On précise que pour un souci de clarté les différents éléments des objets représentés ne sont pas nécessairement reproduits à l'échelle.

La figure 1 représente une vue schématique partielle de coupe d'un module à diodes 100 dans un premier mode de réalisation de l'invention.

Ce module 100 comprend un vitrage feuilleté comportant :
- une première feuille transparente 1, par exemple rectangulaire, présentant une première face principale 11 et une deuxième face principale 12, et une tranche de préférence arrondie (pour éviter les écailles), par exemple une feuille de verre silicosodocalcique, d'épaisseur égale à 2,1 mm,
- une deuxième feuille de verre 1', éventuellement pour une fonction de contrôle solaire, teintée (verre VENUS VG10 par exemple) et/ou recouverte d'un revêtement de contrôle solaire, d'épaisseur égale à 2,1 mm.

La deuxième feuille de verre est feuilletée 1' par un intercalaire de feuilletage 50, par exemple un PVB d'épaisseur 0,76 mm.

Un profilé 3 support de diodes électroluminescentes s'étend en bordure du vitrage et est fixé à la première feuille de verre. Ce support est monolithique métallique (inox, aluminium), mince, d'épaisseur égale à 0,2 mm.

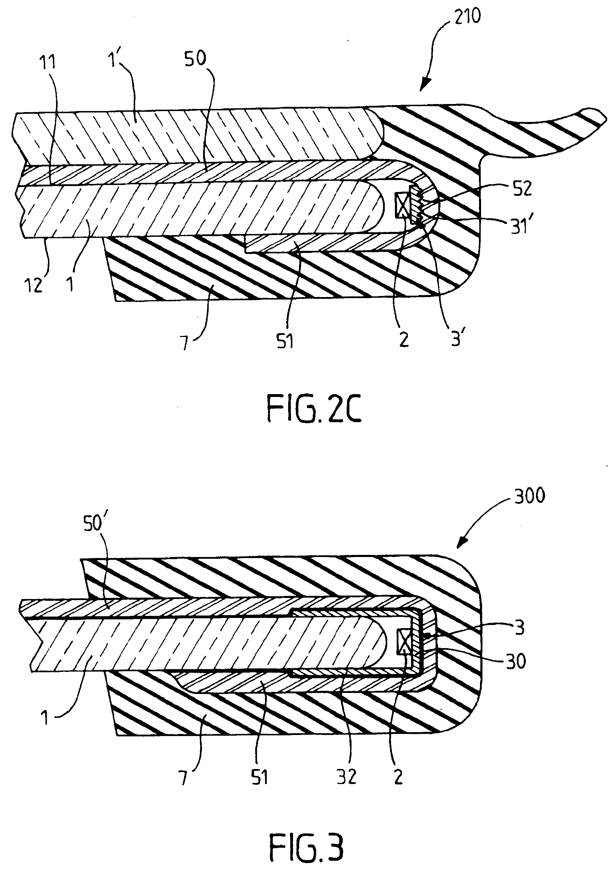

Le support de diodes présente une section variable sensiblement en U, (comme montré en détail par la vue de côté de la figure 3) comportant :
- une partie latérale 30 en regard de la tranche 10 de la première feuille, et porteuse des diodes,
- prolongée par une première aile 31 en contact avec la face principale du vitrage (et en périphérie),
- et prolongée par une deuxième aile 32 en regard d'une autre face principale du vitrage (et en périphérie).

L'écart entre les deux ailes 31, 32 est sensiblement égal à l'épaisseur de la première feuille.

La première aile est de section variable : elle présente des zones saillantes, de préférence en V, pour l'ancrage dans l'intercalaire 50, séparées par des zones évidées, par exemple droites 311.

La longueur d'appui de la première aile dans les zones d'ancrage est réduite, par exemple de 2 à 10 mm, pour tenir compte de la présence de l'intercalaire 50.

La deuxième aile peut aussi être de section variable : elle présente des zones saillantes 320, de toute forme possible, pour renforcer la fixation et des zones évidées, par exemple droites 321.

Dans les zones évidées 321, la deuxième aile est en contact linéaire avec la face 12 pour créer un premier niveau d'étanchéité par rapport à la matière d'encapsulation et/ou pour contenir un moyen d'étanchéité interne au moment du montage, par exemple une colle.

La longueur d'appui de la deuxième aile dans les zones saillantes 320 est par exemple de 2 à 30 mm.

Les zones saillantes 320 et d'ancrage 310 peuvent être en regard, voire décalées.

En variante, le support a une première aile sur la face 12' de la deuxième feuille de verre.

Les diodes électroluminescentes comportant chacune une puce émettrice 2 apte à émettre un ou plusieurs rayonnements dans le visible guidé(s) dans la première feuille. Les diodes sont de petites tailles typiquement quelques mm ou moins, notamment de l'ordre de 2x2x1 mm, sans optique (lentille) et de préférence non pré-encapsulées pour réduire au maximum l'encombrement.

On réduit au maximum la distance entre la partie porteuse des diodes et la tranche, par exemple de 5 mm. La distance entre la puce et la tranche est de 1 à 2 mm.

La direction principale d'émission est perpendiculaire à la face de la puce semi-conductrice, par exemple avec une couche active à multi puits quantique, de technologie AlInGaP ou autres semi-conducteurs.

Le cône de lumière est un cône de type lambertien, de +/-60°.

L'extraction (non représentée ici) peut se faire de préférence par la face intérieure au véhicule, par tout moyen : sablage, attaque acide, couche diffusante, sérigraphie...

On définit donc un espace des rayonnements émis entre chaque puce et la tranche de la première feuille.

Chaque puce et l'espace des rayonnements émis doivent être protégés de toute pollution : eau, chimique etc, ceci à long terme comme pendant la fabrication du module 100.

En particulier, il est utile de pourvoir le module d'une encapsulation polymérique 7, épaisse de 2,5 mm environ, en bordure du vitrage. Cette encapsulation, ici recouvrant le support à diodes, assure une étanchéité à long terme (eau, produit de nettoyage...).

L'encapsulation apporte aussi une bonne finition esthétique et permet d'intégrer d'autres éléments ou fonctions (inserts de renforcement...).

L'encapsulation 7 présente une lèvre, et est biface. L'encapsulation 7 est par exemple en polyuréthane noir, notamment en PU-RIM (reaction in mold en anglais). Cette matière est typiquement injectée jusqu'à 130°C et quelques dizaines de bars.

La matière d'encapsulation noire n'est pas transparente au(x) rayonnement(s) visible(s) des diodes. Pour assurer une bonne injection de la lumière dans la première feuille, on utilise donc des moyens d'étanchéité à la matière d'encapsulation liquide.

Pour ce faire, une fois le support à diode 3 fixé et avant l'injection, on dispose un adhésif extérieur 4 sur la surface du support des diodes opposée à la surface en regard du vitrage, adhésif 4 dépassant sur la périphérie du vitrage, et collé d'une part sur la tranche de la deuxième feuille de verre 1' et d'autre part sur la face 12.

Il peut s'agir d'une bande par exemple acrylique avec adhésif acrylique d'épaisseur 0,4 mm.

Pour une encapsulation de type Flush, on préfère laisser une partie supérieure de la tranche du deuxième verre 1' libre.

Comme montré sur les vues partielles de côté du module 100 (sans dessiner l'encapsulation) :
- la bande 4 peut protéger partiellement les puces et l'espace de couplage (protection inférieure et supérieure), on rajoute pour une protection latérale, un moyen d'étanchéité 43' comme une colle, scellant les extrémités latérales du support (cf. figure 1B),
- la bande 4 peut protéger complètement les puces et l'espace de couplage par des parties latérales 43 dépassantes du support 3 (cf. figure 1C).

La connectique 9' peut dépasser de la bande 4.

En variante, on utilise des rubans de colle.

Le module 100 peut former par exemple un toit panoramique fixe de véhicule terrestre, ou en variante de bateau... Le toit est monté par l'extérieur comme montré en figure 1D, sur la carrosserie 90 via un adhésif 91.

En variante montrée en figure 1E, on a modifié l'encapsulation du module 100 de la manière suivante :
- on supprime la lèvre,
- on ajoute des inserts de fixation du module 93 pour l'ouverture,
- on rajoute contre l'encapsulation un tubing en EPDM 92, autrement dit, un profil d'étanchéité à cellules fermées ou un profil d'étanchéité à lèvres multiples, le profil s'écrasant après montage sur le véhicule.

Le profil d'étanchéité à lèvres multiples peut aussi faire partie intégrante de l'encapsulation.

La première feuille est du côté intérieur du véhicule. L'extraction est de préférence par la face 12.

On peut choisir des diodes (alignées sur le support) émettant en lumière blanche ou colorée pour un éclairage d'ambiance, de lecture...

Le support peut être sur un bord latéral ou longitudinal de la feuille 1.

On peut bien sûr prévoir plusieurs supports sur un même bord ou des bords distincts, avec des fonctions identiques ou distinctes (choix adapté de la puissance, de la lumière émise, de la position et de l'étendue des zones extraction).

L'extraction peut former un dessin lumineux, par exemple un logo ou une marque, une lumière animée (pour enfants ...).

La figure 2A représente une vue schématique, partielle de coupe d'un module à diodes 200 dans un deuxième mode de réalisation de l'invention.

Ce module 200 diffère du module 100 par les moyens d'étanchéité à la matière d'encapsulation.

En effet, l'intercalaire de feuilletage en PVB présente une partie dépassante 51 entre la tranche de la première feuille 1 et la partie latérale 30 du support. Cette partie est rendue adhésive à la tranche par ramollissement du PVB et noie les puces.

Plus précisément le bord du PVB peut être prédécoupé pour avoir des parties dépassantes sous les zones évidées 311 de l'aile 31, qui ne sont pas en appui sur la face 12 (cf. figure 3 également) et des parties pour accueillir les zones d'ancrage 310.

En variante, l'aile 31 est fixée sur la face externe de la deuxième feuille. L'aile peut donc être pleine (de section uniforme) et plus longue.

La figure 2C représente une vue schématique, partielle de coupe d'un module à diodes 210 dans une variante du deuxième mode de réalisation de l'invention.

Ce module 210 diffère du module 200 par le positionnement de la partie dépassante 51 que cette fois couvre le support 3' à diodes. Le support 3' peut être un support sans ailes, de section droite, rectangulaire par exemple, par exemple une carte de circuit imprimé (PCB en anglais).

En outre, le support est prémonté sur la partie dépassante avant son rabattement et pour faciliter son ancrage, il peut comporter des picots 52 sur sa face externe 31' ou latérale.

De plus, la partie dépassante enveloppe le support et vient se coller sur le bord de la face 12. Aussi, dans cette configuration, la feuille 50 sert de fixation des puces au vitrage.

La figure 3 représente une vue schématique, partielle de coupe d'un module à diodes 300 dans un troisième mode de réalisation de l'invention.

Ce module 300 diffère du module 210 :
- par le remplacement (optionnel) du vitrage feuilleté par un vitrage simple, par exemple en plastique, PC par exemple, complété par le remplacement (optionnel) de l'intercalaire de feuilletage par au moins un film fonctionnel, par exemple un film d'extraction de lumière 50' en PU, PP, PE, avec une face adhésive, (par colle etc) qui est en contact avec le vitrage,
- par le positionnement de la partie dépassante 51 de ce film que cette fois couvre le support 3 à diodes en U.

De plus, la partie dépassante enveloppe le support 3 et vient se coller sur le bord de la face 12.

Enfin, le support en U peut être de section uniforme, avec des ailes (pleines) de mêmes dimensions.

La figure 4 représente une vue schématique, partielle de coupe d'un module à diodes 400 dans un quatrième mode de réalisation de l'invention.

Ce module 400 diffère du module 100 par les moyens d'étanchéité à la matière d'encapsulation.

En effet, on supprime (on peut aussi la conserver) la bande adhésive externe et on ajoute une bande adhésive double face 5 enveloppant les puces (bande soit discontinue, pour (groupe de) diode(s) ou bande monobloc pour toutes les diodes) et adhérant à la tranche du vitrage 10.

La bande double face laisse passer les rayonnements émis par les diodes. L'espace des rayonnements émis (zone entre les puces et la tranche de couplage, délimité par les rayonnements des diodes les plus écartés) est aussi protégé par cette bande.

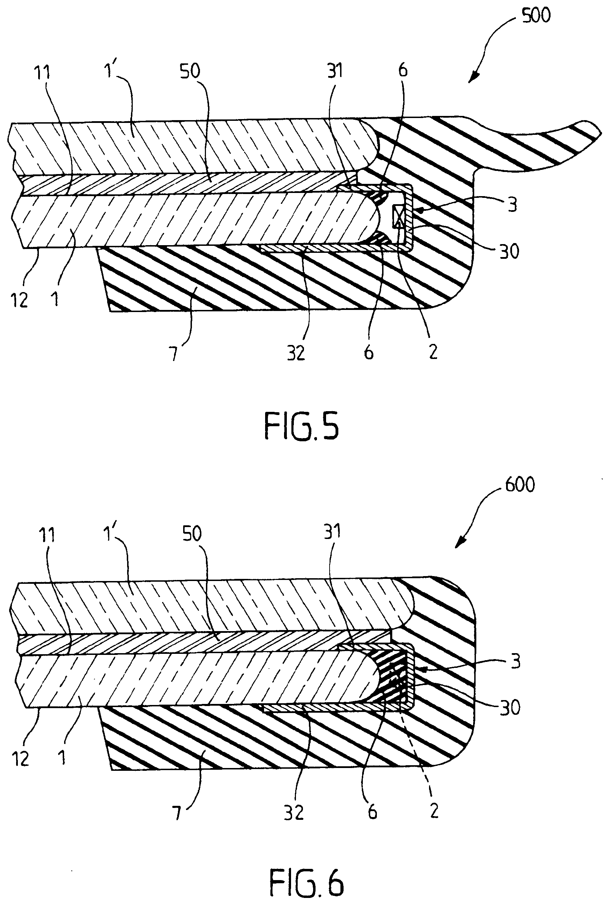

Les figures 5 à 7 représentent des vues schématiques, partielles de coupes des modules à diodes 500 à 700 dans des modes de réalisation de l'invention.

Le module 500 diffère du module 100 par les moyens d'étanchéité à la matière d'encapsulation à savoir une colle 6 au niveau des zones de contact du support au vitrage.

Cette colle est choisie transparente au(x)dit(s) rayonnement(s) des diodes si elle rentre dans l'espace des rayonnements émis.

Naturellement cette colle peut être de préférence complétée par une colle (similaire ou distincte) ou tout autre moyen de scellement des parties latérales du support (comme déjà décrit en figure 1B).

Le module 600 diffère du module 100 par les moyens d'étanchéité à la matière d'encapsulation à savoir une colle 6 noyant les puces et remplissant tout l'espace entre la tranche et le support.

Cette colle est choisie transparente au(x)dit(s) rayonnement(s) des diodes car elle rentre dans l'espace des rayonnements émis. Il diffère aussi en ce que la première feuille de verre est évidée localement et débouchante sur les deux faces principales pour loger les diodes et ici le support, afin de limiter au maximum la largeur d'encapsulation ou, dans une variante, du joint prémonté, pour avoir un clair de vitre le plus grand possible.

Le module 700 diffère du module 600 par l'emplacement des puces 2, en regard de la face 12, et la modification en conséquence de l'aile 32 avec un espace pour loger les puces et une semelle d'appui 32' contre la face 12.

Les figures 8 à 10 représentent des vues schématiques, partielles de coupes des modules à diodes 800 à 1000 dans des modes de réalisation de l'invention.

Ces modules 800 à 1100 diffèrent du module 100 en premier lieu par l'absence d'encapsulation et par la présence d'un joint prémonté.

Le joint 80 du module 800 est un joint en EPDM 81 extrudé de section uniforme en U, et une âme de renforcement métallique 83. Le joint comporte une extrémité de clipsage 82 sur la face 12. Dans cette configuration, le joint 80 sert de fixation des puces 2 au vitrage. Le support 3' à diodes est un support sans ailes, de section droite, rectangulaire par exemple une carte de circuit imprimé (PCB en anglais). L'étanchéité (à l'eau, au lavage haute pression, aux produits de nettoyage ...) est assurée par un adhésif transparent interne 6.

Dans les modules 900 à 1100, on remplace le vitrage feuilleté par un vitrage simple, par exemple en plastique, PC par exemple.

Le joint 80 du module 900 est un joint en EPDM 81 extrudé de section uniforme en U, et une âme de renforcement métallique 83. Le joint comporte une extrémité de clipsage 82 sur un évidement d'une couche de masquage en polycarbonate noire 9 en bordure de la face 12. Dans cette configuration, le joint 80 sert de fixation des puces au vitrage feuilleté. Le support 3' à diodes est un support sans ailes, de section droite, rectangulaire par exemple une carte de circuit imprimé (PCB en anglais). Une rainure est pratiquée dans la tranche où sont logées les diodes. L'étanchéité (à l'eau, au lavage haute pression, aux produits de nettoyage ...) est assurée par un adhésif transparent interne 6.

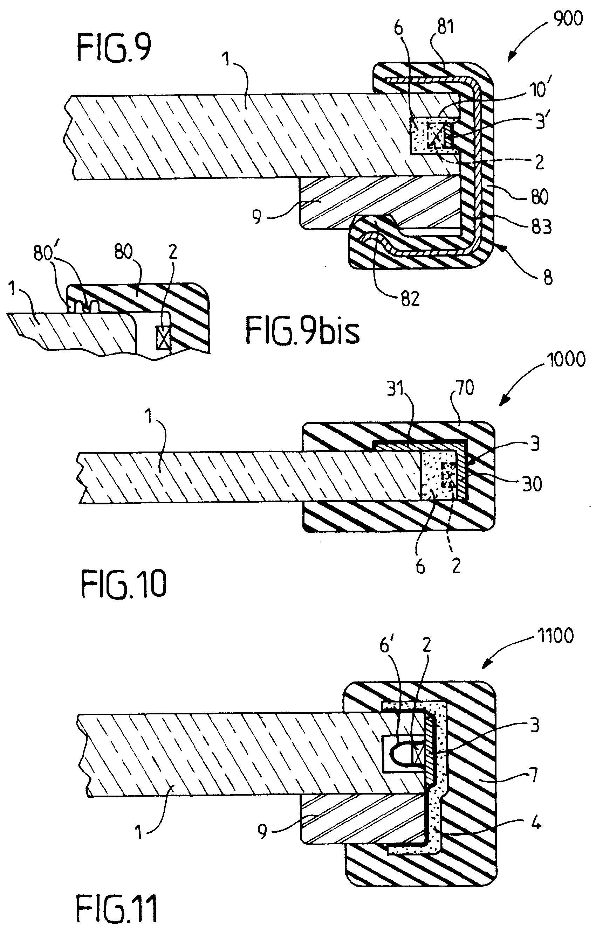

En variante, montré en figure 9bis, le joint 80 est doté de lèvres d'étanchéité 80'. La colle interne n'est alors pas nécessaire ce qui permet de démonter le joint plus facilement. Toutefois, la zone de jonction de bouts du joint peut elle, être rendue étanche à l'eau, au lavage haute pression, aux produits de nettoyage etc, par tout moyen déjà décrit.

Le joint 70 du module 1000 est un joint en TPE ou EPDM 70 extrudé de section uniforme en U.

Le support 3' à diodes est un support en L prémonté sur le joint 70 par adhésif ou tout autre moyen. L'étanchéité (à l'eau, au lavage haute pression, aux produits de nettoyage) est assurée par un adhésif transparent interne 6.

La figure 11 représente une vue schématique, partielle de coupe d'un module à diodes 1100 dans un mode de réalisation de l'invention.

Ce module 1100 diffère du module 100 par les éléments suivants :
- remplacement du vitrage feuilleté par un vitrage simple en PC, avec une couche de masquage noire en PC, en périphérie de la face 12,
- bande adhésive externe 4 sensiblement en U,
- puces avec pré-encapsulation 6' dans une rainure du vitrage du bord de couplage, débouchante ou non sur un autre bord de vitrage.

Si la bande 4 n'est pas totalement recouvrante sur les côtés, on rajoute pour une protection complète de la matière 7, un moyen d'étanchéité comme une colle, scellant la rainure pour empêcher la pénétration du fluide par les côtés.

La figure 12 représente une vue schématique, partielle de coupe d'un module à diodes 1200 dans un mode de réalisation de l'invention.

Ce module 1200 diffère du module 100 par les éléments suivants :
- remplacement du vitrage feuilleté par un vitrage simple en PC, avec une couche de masquage noire en Pc, en périphérie de la face 12,
- bande adhésive externe 4 sensiblement en U,
- encapsulation tri face.

L'extraction 12a est recouverte par une zone noire de masquage 12d.

Par exemple ce module est montré sur une vitre latérale (montrée en figure 13) avec un clair de vitre 12d ou sur une lunette arrière de véhicule terrestre (montrée en figure 14 dans une variante).

La lumière est vue de l'extérieur (moyen de repérage du véhicule pour la vitre ou la lunette, feux stop..).

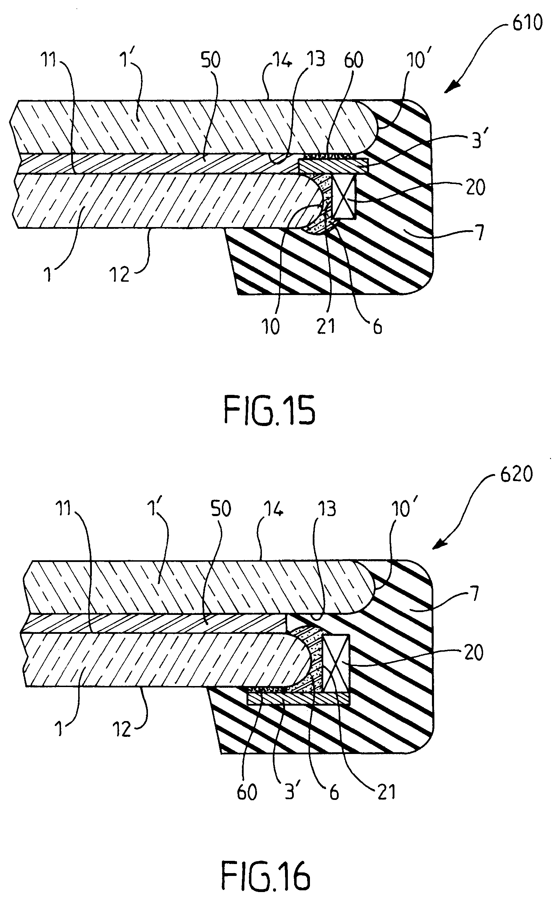

La figure 15 représente une vue schématique partielle de coupe d'un module à diodes 610 dans un mode de réalisation de l'invention.

Ce module diffère du module 600 décrit en figure 6 :
- par le type de support, qui est une simple barrette rectangulaire 3', typiquement un PCB, en plastique voire en métal,
- par la fixation éventuelle du support en périphérie de la face de feuilletage 13 de la deuxième feuille de verre via une colle ou un adhésif double face 60 qui permet de prépositionner le support avec l'ajout des moyens adhésif étanche dans l'espace de couplage
- par le choix des diodes, ici à émission latérale, donc avec une face émettrice avant latérale 21 en regard de la tranche 10.

Dans cette configuration, la face arrière des diodes (et les cotés) est en contact avec la matière d'encapsulation 7. Il a été observé de manière surprenante que les diodes pouvaient être en contact avec la matière (hormis leurs face émettrices) car elles résistaient aux conditions d'encapsulation (température notamment) du polyuréthane ou des thermoplastiques souples de préférence injectés à moins de 250°C voire 200°C.

Ainsi de manière plus générale on peut utiliser un support de forme simple ne forme pas écran entre l'encapsulât et les diodes (plutôt qu'un support U , J ou L).

En outre, le support 3' est suffisamment large pour éviter la propagation de lumière parasite en bordure de la deuxième feuille (et donc la vision de cette lumière de l'extérieur) par exemple dans le cas d'une encapsulation flush.

Naturellement, on peut quand même prévoir un support plus étendu en L ou en U notamment.

En variante non montrée, on supprime l'adhésif interne d'étanchéité 6, le collage se fait par l'adhésif 60, et on protège l'espace de couplage, en entoure les diodes et le support d'une bande adhésive enveloppante par exemple analogue à celle montrée en figure 1a et fixée sur la tranche 10' et sur la périphérie de la face 12, sous l'encapsulât.

La figure 16 représente une vue schématique partielle de coupe d'un module à diodes 620 dans un mode de réalisation de l'invention.

Ce module diffère du module 610 décrit en figure 15 par le positionnement du support 3' ici collé sur la périphérie de la première face principale 12 par un adhésif 60.

Naturellement, on peut prévoir un support plus étendu en L ou en U ou en J (avec une aile plus courte sur la face 13 pour éviter la lumière parasite notamment).

En variante il peut s'agir d'un vitrage simple.

## Revendications

1. Module à diodes électroluminescentes pour véhicule (100, 200, 210, 300, 400, 500, 600, 610, 620, 700,1100, 1200) comportant :
- un vitrage avec des faces principales (11, 12) et une tranche (10), le vitrage comportant au moins une première feuille transparente (1) présentant une première face principale (11) et une deuxième face principale (12),
- des diodes électroluminescentes (2) comportant chacune une puce émettrice (2) apte à émettre un ou plusieurs rayonnements dans le visible guidé(s) dans la première feuille,
- un profilé support des diodes (3, 3', 52, 80) s'étendant en bordure du vitrage et fixé au vitrage,
- des moyens d'étanchéité au(x) fluide(s) aptes à protéger les puces et l'espace des rayonnements émis par les puces avant injection, dans la première feuille,
- une encapsulation polymérique (7), située en bordure du vitrage, entourant ledit espace et formant des moyens additionnels d'étanchéité au(x) fluide(s) dudit espace, recouvrant le support de fixation (3, 3',30), lesdits moyens d'étanchéité au(x) fluide(s) étant alors choisis étanches à la matière d'encapsulation liquide injectée à une température et une pression donnée.

2. Module à diodes pour véhicule (100, 210, 300, 1100, 1200) selon la revendication précédente **caractérisé en ce que** le support des diodes présente éventuellement une surface porteuse des puces qui est en regard de la tranche de la première feuille et les moyens d'étanchéité au(x) fluide(s) sont un adhésif dit extérieur (4, 52), entourant ledit espace, éventuellement placé sur la surface du support des diodes opposée à ladite surface en regard du vitrage et dépassant sur la périphérie du vitrage, notamment bande(s) adhésive(s) éventuellement enveloppant le support, ou ruban(s) de colle, et l'adhésif ayant éventuellement une âme rigide dépassante non recouverte.

3. Module à diodes pour véhicule (200, 400, 500, 600, 610, 620, 700, 1100) selon l'une des revendications précédentes **caractérisé en ce que** les moyens d'étanchéité au(x) fluide(s) comprennent des moyens d'étanchéité entre le vitrage et le profilé support de diodes, choisis parmi :
- une matière adhésive (5, 51, 6) de remplissage de l'espace des rayonnements émis transparente au(x)dit(s) rayonnement(s), de préférence une colle, une résine thermoplastique, un adhésif double face,
ou
- une matière adhésive de protection (6) de l'espace des rayonnements émis qui est agencée au niveau des zones de contact du support au vitrage, transparente au(x)dit(s) rayonnement(s) des diodes si en partie dans l'espace des rayonnements émis et/ou une matière adhésive de protection (43') de l'espace des rayonnements émis disposée pour sceller les parties libres du support (3) à diodes par les côtés du support,
- et une matière de protection des puces transparente au(x)dit(s) rayonnement(s) identique à la matière de remplissage ou distincte notamment une matière de pré-encapsulation (6') des puces.

4. Module à diodes pour véhicule (200, 400, 600, 610, 620, 700) selon la revendication précédente **caractérisé en ce que** la matière adhésive de protection des puces, transparente au(x)dit(s) rayonnement(s) est identique à la matière de remplissage et est choisie parmi :
- un adhésif (6), éventuellement noyant les puces, et fixant les puces au vitrage, c'est-à-dire à la première feuille, de préférence par la tranche,
- ou un adhésif double face (5), collé sur les puces et le support par une face adhésive et collé au vitrage, c'est-à-dire à la première feuille de préférence par la tranche, par l'autre face adhésive,

5. Module à diodes pour véhicule (100, 200, 210, 400, 500, 600, 610, 620, 700, 1100, 1200) selon l'une des revendications précédentes **caractérisé en ce que** l'encapsulation polymérique (7) est en polyuréthane ou en thermoplastique souple choisi parmi thermoplastique élastomère (TPE), polyvinyle chlore (PVC), terpolymère éthylène-propylène-diène (EPDM).

6. Module à diodes pour véhicule selon la revendication précédente **caractérisé en ce qu'**elle comporte entre l'encapsulation et le vitrage, notamment en verre minéral, une couche de primaire, mono, bi ou tri-composants, par exemple à base de polyuréthane, polyester, polyvinyle acétate, isocyanate.

7. Module à diodes pour véhicule (610, 620) selon l'une des revendications 5 à 6 caractérisé en ce l'encapsulation polymérique (7), est en contact avec les puces en dehors des faces émettrices (21), voire noie les puces à l'exception des faces émettrices.

8. Module à diodes pour véhicule selon la revendication 7 **caractérisé en ce que** le profilé est une barrette rectangulaire (3') collé et/ou contre la périphérie d'une des faces principales (12, 13) du vitrage.

9. Module à diodes pour véhicule (200, 210, 300) selon l'une des revendications 1 à 7 **caractérisé en ce que** le support comporte une partie latérale (3', 30) en regard de la tranche (10) de la première feuille et porteuse des puces, et **en ce que** le vitrage comporte une couche dite protectrice adhésive (50, 50') au moins en bordure de l'une des première ou deuxième faces,
- la couche protectrice transparente au(x) rayonnement(s) est dépassante (51) en s'étendant sur la tranche entre la partie latérale et la tranche, remplissant l'espace des rayonnements émis et/ou noyant lesdites puces,
- ou la couche protectrice étant dépassante avec une partie rabattue recouvrant la partie latérale (3',30), formant ainsi ledit adhésif externe, de préférence enveloppant et/ou portant ledit support.

10. Module à diodes pour véhicule (200, 210) selon la revendication précédente **caractérisé en ce que** la couche protectrice est un intercalaire de feuilletage (50), le vitrage étant feuilleté comportant une deuxième feuille (1'), feuilleté par l'intercalaire de feuilletage à la première feuille (1).

11. Module à diodes pour véhicule (200) selon l'une des revendications 9 ou 10 **caractérisé en ce que** le support comporte une aile (31) sur la face de la première feuille (11) en contact avec la couche protectrice (50), l'aile étant discontinue pour le remplissage par ladite couche de protection de l'espace de couplage et/ou des puces.

12. Module à diodes pour véhicule (200) selon l'une des revendications 9 à 11 **caractérisé en ce que** la partie latérale est prolongée par une aile (31) sur la face du première feuille en contact avec la couche protectrice avec des zones saillantes d'ancrage (310) dans la couche protectrice.

13. Module à diodes pour véhicule (610) selon l'une des revendications 1 à 8 **caractérisé en ce que** le vitrage est feuilleté comportant une deuxième feuille (1'), feuilleté par un intercalaire de feuilletage à la première feuille (1) et **en ce que** la première feuille comprend un évidement pour loger les diodes et débouchant sur les première et deuxième face principales (11, 12) **en ce que** le profilé support (3'), de préférence une barrette rectangulaire, est contre, de préférence collé, la périphérie de la face de feuilletage (13) de la deuxième feuille de façon à supprimer la lumière parasite dans la deuxième feuille notamment lorsque l'encapsulation (7) est affleurante sur la face (14) de la deuxième feuille opposée à la face de feuilletage.

14. Module à diodes pour véhicule (300, 1100, 1200) selon l'une des revendications 1 à 8 **caractérisé en ce que** le vitrage est simple, la première feuille (1) étant en verre ou en plastique, notamment en PC.

15. Module à diodes pour véhicule (610, 620) selon l'une des revendications précédentes **caractérisé en ce que** des diodes sont à émission latérale, les faces émettrices (21) étant en regard de la tranche de la première feuille et les diodes agencées sur le profilé support de fixation, de préférence une barrette rectangulaire, contre et/ou collé à l'une des faces principales du vitrage de préférence par un adhésif double face (60).

16. Module à diodes pour véhicule (100, 200, 210, 300, 400, 500, 600, 610, 620, 700, 1100, 1200) selon l'une des revendications précédentes **caractérisé en ce que** l'injection est réalisé par la tranche de la première feuille par un bord de couplage, ledit bord de couplage de la première feuille (10) est de préférence arrondi et/ou dépoli.

17. Module à diodes pour véhicule (600, 610, 620 , 1100) selon l'une des revendications 1 à 16 **caractérisé en ce que** la tranche, le coin ou un bord de l'une des faces de la première feuille comporte un ou plusieurs évidements où sont placées les puces et dans le cas d'un vitrage feuilleté l'évidement de la première feuille est une seule rainure débouchante sur les faces principales de la première feuille.

18. Module à diodes pour véhicule (100, 200, 210, 300, 400, 500, 600, 610, 620, 700, 1100, 1200) selon l'une des revendications précédentes **caractérisé en ce que** la distance entre la partie porteuse des puces et la première feuille est inférieure ou égale à 5 mm, et/ou la distance entre les puces et la première feuille est inférieure ou égale à 2 mm.

19. Module à diodes pour véhicule (100, 200, 300, 400, 500, 600, 700, 1200) selon l'une des revendications précédentes **caractérisé en ce que** le support a une section locale sensiblement en U, éventuellement variable, et comporte :
- au moins une partie latérale (30) en regard de la tranche du vitrage, de préférence porteuse des diodes qui ne sont pas à émission latérale,
- prolongée par une aile (31) en regard d'une face principale (11) du vitrage et en périphérie de préférence porteuse des diodes à émission latérale,
- et prolongée par une autre aile (32) en regard d'une autre face principale (12) du vitrage et en périphérie.

20. Module à diodes pour véhicule (100, 200, 210, 300, 400, 500, 600, 610, 620, 700, 1100, 1200) selon l'une des revendications précédentes **caractérisé en ce que** par extraction des rayonnements guidés, on forme un éclairage interne d'ambiance, un éclairage interne de lecture, un affichage lumineux de signalisation interne et/ou externe.

21. Utilisation du module à diodes (100, 200, 210, 300, 400, 500, 600, 610, 620, 700, 1100, 1200) pour véhicule selon l'une des revendications précédentes comme :
- vitres latérales, toit, lunette arrière, pare brise d'un véhicule terrestre, notamment automobile, véhicule utilitaire, camion, train,
- hublot, pare-brise d'un véhicule aérien,
- vitres de fenêtre, toit, d'un véhicule aquatique, bateau, sous marin.

22. Utilisation du module à diodes (100, 200, 210, 300, 400, 500, 600, 610, 620, 700, 1100, 1200) pour véhicule selon l'une des revendications précédentes comme toit d'un véhicule terrestre, notamment automobile, véhicule utilitaire, camion, train.

23. Véhicule incorporant le module (100, 200, 210, 300, 400, 500, 600, 610, 620, 700, 1100, 1200) selon l'une des revendications précédentes.

## Patentansprüche

1. Leuchtdiodenmodul für Fahrzeug (100, 200, 210, 300, 400, 500, 600, 610, 620, 700,1100, 1200), das Folgendes aufweist:
- eine Verglasung mit Hauptseiten (11, 12) und einer Kante (10), wobei die Verglasung mindestens eine erste transparente Scheibe (1) aufweist, die eine erste Hauptseite (11) und eine zweite Hauptseite (12) aufweist,
- Leuchtdioden (2), die jede einen Senderchip (2) aufweisen zum Aussenden einer oder mehrerer Strahlungen im sichtbaren Bereich, die in die erste Scheibe geleitet wird bzw. werden,
- ein Tragprofil der Dioden (3, 3', 52, 80), das sich am Rand der Verglasung erstreckt und an der Verglasung befestigt ist,
- Mittel zum Abdichten gegenüber Fluid bzw. Fluiden zum Schutz der Chips und des Raumes der von den Chips ausgesendeten Strahlungen vor Einspeisung in die erste Scheibe,
- eine Polymereinkapselung (7), die sich am Rand der Verglasung befindet, den Raum umgibt und zusätzliche Mittel zum Abdichten des Raums gegenüber Fluid bzw. Fluiden bildet, die den Befestigungsträger (3, 3', 30) bedeckt, wobei die Mittel zum Abdichten gegenüber Fluid bzw. Fluiden dann abdichtend gegenüber dem flüssigen Einkapselungsmaterial gewählt sind, das bei einer bestimmten Temperatur und einem bestimmten Druck eingespeist wird.

2. Diodenmodul für Fahrzeug (100, 210, 300, 1100, 1200) nach dem vorhergehenden Anspruch, **dadurch gekennzeichnet, dass** der Träger der Dioden gegebenenfalls eine Oberfläche zum Tragen der Chips aufweist, die sich der Kante der ersten Scheibe gegenüber befindet, und die Mittel zum Abdichten gegenüber Fluid bzw. Fluiden ein so genanntes äußeres Haftmittel (4, 52) sind, das den Raum umgibt und gegebenenfalls auf der Oberfläche des Trägers der Dioden platziert ist, die zu der Oberfläche gegenüber der Verglasung entgegengesetzt ist, und über den Rand der Verglasung hinausragt, insbesondere ein Haftband bzw. Haftbänder, die den Träger gegebenenfalls umgeben, oder ein oder mehrere Klebestreifen, und wobei das Haftmittel gegebenenfalls einen starren Kern hat, der übersteht und nicht bedeckt ist.

3. Diodenmodul für Fahrzeug (200, 400, 500, 600, 610, 620, 700, 1100) nach einem der vorhergehenden Ansprüche, **dadurch gekennzeichnet, dass** die Mittel zum Abdichten gegenüber Fluid bzw. Fluiden Mittel zum Abdichten zwischen der Verglasung und dem Tragprofil der Dioden umfassen, die ausgewählt sind aus
- einem Haftmaterial (5, 51, 6) zum Füllen des Raums der ausgesendeten Strahlungen, das für die Strahlung(en) transparent ist, vorzugsweise ein Klebstoff, ein thermoplastisches Harz, ein doppelseitiges Klebeband, oder
- einem Haftmaterial zum Schutz (6) des Raums der ausgesendeten Strahlungen, das im Bereich der Kontaktzonen des Trägers mit der Verglasung vorgesehen ist und für die Strahlung(en) der Dioden transparent ist, sofern zum Teil in dem Raum der ausgesendeten Strahlungen, und/oder einem Haftmittel zum Schutz (43') des Raums der ausgesendeten Strahlungen, das angeordnet ist, um die freien Teile des Diodenträgers (3) über die Seiten des Trägers zu versiegeln,
- und einem Material zum Schutz der Chips, das für die Strahlung(en) transparent ist und mit dem Füllmaterial identisch oder von ihm verschieden ist, insbesondere ein Material zum Voreinkapseln (6') der Chips.

4. Diodenmodul für Fahrzeug (200, 400, 600, 610, 620, 700) nach dem vorhergehenden Anspruch, **dadurch gekennzeichnet, dass** das Haftmittel zum Schutz der Chips, das für die Strahlung(en) transparent ist, mit dem Füllmaterial identisch ist und gewählt ist aus
- einem Haftmaterial (6), das die Chips gegebenenfalls versenkt und die Chips an der Verglasung, das heißt an der ersten Scheibe, vorzugsweise über die Kante befestigt,
- oder einem doppelseitigen Klebeband (5), das auf die Chips und den Träger über eine Haftseite geklebt ist und mit der Verglasung, das heißt mit der ersten Scheibe vorzugsweise über die Kante, über die andere Haftseite verklebt ist.

5. Diodenmodul für Fahrzeug (100, 200, 210, 400, 500, 600, 610, 620, 700, 1100, 1200) nach einem der vorhergehenden Ansprüche, **dadurch gekennzeichnet, dass** die Polymereinkapselung (7) aus Polyurethan oder aus flexiblem Thermoplast ist, das gewählt ist aus thermoplastischem Elastomer (TPE), Polyvinylchlorid, Ethylen-Propylen-Dien-Terpolymer (EPDM).

6. Diodenmodul für Fahrzeug nach dem vorhergehenden Anspruch, **dadurch gekennzeichnet, dass** es zwischen der Einkapselung und der Verglasung, insbesondere aus mineralischem Glas, eine Ein-, Zwei- oder Dreikomponentengrundierungsschicht, beispielsweise auf der Basis von Polyurethan, Polyester, Polyvinylacetat, Isocyanat umfasst.

7. Diodenmodul für Fahrzeug (610, 620) nach einem der Ansprüche 5 bis 6, **dadurch gekennzeichnet, dass** die Polymereinkapselung (7) mit den Chips außerhalb der emittierenden Flächen (21) in Kontakt ist, oder sogar die Chips mit Ausnahme der emittierenden Flächen versenkt.

8. Diodenmodul für Fahrzeug nach Anspruch 7, **dadurch gekennzeichnet, dass** das Profil eine rechtwinklige Leiste (3') ist, die gegen den Rand einer der Hauptseiten (12, 13) der Verglasung geklebt ist und/oder anliegt.

9. Diodenmodul für Fahrzeug (200, 210, 300) nach einem der Ansprüche 1 bis 7, **dadurch gekennzeichnet, dass** der Träger einen Seitenteil (3' 30) aufweist, der sich der Kante (10) der ersten Scheibe gegenüber befindet und die Chips trägt, und dass die Verglasung eine so genannte haftende Schutzschicht (50, 50') mindestens am Rand einer der ersten oder zweiten Seiten aufweist,
- wobei die für die Strahlung(en) transparente Schutzschicht überstehend (51) ist, indem sie sich auf der Kante zwischen dem Seitenteil und der Kante erstreckt, wobei sie den Raum der ausgesendeten Strahlungen füllt und/oder die Chips versenkt,
- oder wobei die Schutzschicht überstehend ist mit einem umgeklappten Teil, der den Seitenteil (3, 30) bedeckt, wodurch sie das äußere Haftmittel bildet, indem sie vorzugsweise den Träger umhüllt und/oder trägt.

10. Diodenmodul für Fahrzeug (200, 210) nach dem vorhergehenden Anspruch, **dadurch gekennzeichnet, dass** die Schutzschicht eine verbindende Zwischenschicht (50) ist, wobei die Verglasung als Verbundglas eine zweite Scheibe (1') aufweist, die mit der ersten Scheibe (1) über die verbindende Zwischenschicht verbunden ist.

11. Diodenmodul für Fahrzeug (200) nach einem der Ansprüche 9 bis 10, **dadurch gekennzeichnet, dass** der Träger einen Flügel (31) auf der Seite der ersten Scheibe (11) in Kontakt mit der Schutzschicht (50) aufweist, wobei der Flügel unterbrochen ist zum Füllen des Kopplungsraums und/oder der Chips durch die Schutzschicht.

12. Diodenmodul für Fahrzeug (200) nach einem der Ansprüche 9 bis 11, **dadurch gekennzeichnet, dass** der Seitenteil durch einen Flügel (31) auf der Seite der ersten Scheibe in Kontakt mit der Schutzschicht mit vorspringenden Verankerungszonen (310) in der Schutzschicht verlängert ist.

13. Diodenmodul für Fahrzeug (610) nach einem der Ansprüche 1 bis 8, **dadurch gekennzeichnet, dass** die Verglasung als Verbundglas eine zweite Scheibe (1') aufweist, die mit der ersten Scheibe (1) über eine verbindende Zwischenschicht verbunden ist und dass die erste Scheibe eine Ausnehmung umfasst zum Aufnehmen der Dioden, die auf der ersten und zweiten Hauptseite (11, 12) ausmündet, dass das Trageprofil (3'), vorzugsweise eine rechtwinklige Leiste, gegen den Rand der Verbindungsseite (13) der zweiten Scheibe anliegt, vorzugsweise geklebt ist, so dass das Streulicht in der zweiten Scheibe insbesondere dann unterdrückt wird, wenn die Einkapselung (7) auf der Seite (14) der zweiten Scheibe, die zu der Verbindungsseite entgegengesetzt ist, flächenbündig ist.

14. Diodenmodul für Fahrzeug (300, 1100, 1200) nach einem der Ansprüche 1 bis 8, **dadurch gekennzeichnet, dass** die Verglasung einfach ist, wobei die erste Scheibe (1) aus Glas oder aus Kunststoff, insbesondere aus PC ist.

15. Diodenmodul für Fahrzeug (610, 620) nach einem der vorhergehenden Ansprüche, **dadurch gekennzeichnet, dass** Dioden seitlich emittierende Dioden sind, wobei sich die emittierenden Flächen (21) der Kante der ersten Scheibe gegenüber befinden und die Dioden auf dem Befestigungstragprofil, vorzugsweise einer rechtwinkligen Leiste, vorgesehen sind, das gegen eine der Hauptseiten der Verglasung anliegt und/oder geklebt ist, vorzugsweise über ein doppelseitiges Klebeband (60).

16. Diodenmodul für Fahrzeug (100, 200, 210, 300, 400, 500, 600, 610, 620, 700, 1100, 1200) nach einem der vorhergehenden Ansprüche, **dadurch gekennzeichnet, dass** die Einspeisung über die Kante der ersten Scheibe über einen Kopplungsrand erfolgt, wobei der Kopplungsrand der ersten Scheibe (10) vorzugsweise abgerundet und/oder satiniert ist.

17. Diodenmodul für Fahrzeug (600, 610, 620, 1100) nach einem der Ansprüche 1 bis 16, **dadurch gekennzeichnet, dass** die Kante, die Ecke oder ein Rand der einen der Seiten der ersten Scheibe eine oder mehrere Ausnehmungen aufweist, wo die Chips platziert sind, und für den Fall einer Verbundverglasung die Ausnehmung der ersten Scheibe eine einzige Nut ist, die auf den Hauptseiten der ersten Scheibe ausmündet.

18. Diodenmodul für Fahrzeug (100, 200, 210, 300, 400, 500, 600, 610, 620, 700, 1100, 1200) nach einem der vorhergehenden Ansprüche, **dadurch gekennzeichnet, dass** der Abstand zwischen dem Trägerteil der Chips und der ersten Scheibe kleiner oder gleich 5 mm ist und/oder der Abstand zwischen den Chips und der ersten Scheibe kleiner oder gleich 2 mm ist.

19. Diodenmodul für Fahrzeug (100, 200, 300, 400, 500, 600, 700, 1200) nach einem der vorhergehenden Ansprüche, **dadurch gekennzeichnet, dass** der Träger einen im Wesentlichen U-förmigen lokalen Querschnitt hat, der gegebenenfalls variabel ist und Folgendes aufweist:
- mindestens einen Seitenteil (30), der sich der Kante der Verglasung gegenüber befindet und vorzugsweise die Dioden trägt, die nicht seitlich emittierend sind,
- verlängert über einen Flügel (31), der sich einer Hauptseite (11) der Verglasung gegenüber befindet und vorzugsweise am Rand als Träger der seitlich emittierenden Dioden,
- und verlängert über einen weiteren Flügel (32), der sich einer anderen Hauptseite (12) der Verglasung gegenüber befindet sowie am Rand.

20. Diodenmodul für Fahrzeug (100, 200, 210, 300, 400, 500, 600, 610, 620, 700, 1100, 1200) nach einem der vorhergehenden Ansprüche, **dadurch gekennzeichnet, dass** durch Extraktion der geleiteten Strahlungen eine innere Raumbeleuchtung, eine Innenlesebeleuchtung, eine innere und/oder äußere leuchtende Signalanzeige gebildet wird.

21. Verwendung des Diodenmoduls (100, 200, 210, 300, 400, 500, 600, 610, 620, 700, 1100, 1200) für Fahrzeug nach einem der vorhergehenden Ansprüche als
- Seitenscheiben, Dach, Heckscheibe, Windschutzscheibe eines Landfahrzeugs, insbesondere Kraftfahrzeugs, Nutzfahrzeugs, Lkw, Zuges,
- Bullauge, Windschutzscheibe eines Luftfahrzeugs,
- Fensterscheiben, Dach, eines Wasserfahrzeugs, Schiffes, U-Bootes.

22. Verwendung des Diodenmoduls (100, 200, 210, 300, 400, 500, 600, 610, 620, 700, 1100, 1200) für Fahrzeug nach einem der vorhergehenden Ansprüche als Dach eines Landfahrzeugs, insbesondere Kraftfahrzeugs, Nutzfahrzeugs, Lkw, Zuges.

23. Fahrzeug, in welches das Diodenmodul (100, 200, 210, 300, 400, 500, 600, 610, 620, 700, 1100, 1200) nach einem der vorhergehenden Ansprüche integriert ist.

## Claims

1. Light-emitting diode module (100, 200, 210, 300, 400, 500, 600, 610, 620, 700, 1100, 1200), for a vehicle, comprising:
- a glazing unit with main faces (11, 12), and an edge face (10), the glazing comprising at least one first transparent sheet (1) having a first main face (11) and a second main face (12);
- light-emitting diodes (2) each comprising an emitting chip (2) able to emit one or more wavelengths in the visible, guided in the first sheet;
- a bracket (3, 3', 52, 80) supporting the diodes, extending as a border of the glazing and fastened to the glazing; and
- means, for sealing against fluid(s), able to protect the chips and the light-emission volume of the chips before injection into the first sheet, and
- a polymer encapsulation (7), located bordering the glazing, surrounding said volume and forming additional means for sealing said volume against fluid(s), and covering the fastening bracket (3, 3', 30), said means for sealing against fluid(s) being chosen to seal against the liquid encapsulation material injected at a given temperature and pressure.

2. Diode module (100, 210, 300, 1100, 1200), for a vehicle, according to the preceding claim, **characterized in that** the diode bracket optionally has a surface bearing chips which faces the edge face of the first sheet and the means for sealing against fluid(s) is an adhesive, called an external adhesive (4, 52), surrounding said volume, optionally placed on the surface of the diode bracket opposite said surface facing the glazing, and extending beyond the periphery of the glazing, especially one or more adhesive strips, optionally enveloping the bracket, or one or more adhesive tapes, the adhesive strip optionally having an uncovered protruding rigid core.

3. Diode module (200, 400, 500, 600, 610, 620, 700, 1100) according to either of the preceding claims, **characterized in that** the means for sealing against fluid(s) comprise sealing means between the glazing and the diode bracket, chosen from
- an adhesive material (5, 51, 6) for filling the light-emission volume that is transparent at said wavelength(s), preferably an adhesive, a thermoplastic resin, a double-sided adhesive; or
- an adhesive material (6) for protecting the light-emission volume, which adhesive is placed in regions where the bracket makes contact with the glazing, is transparent at said wavelength(s) of the diodes if it partially fills the light-emission volume and/or an adhesive material (43), for protecting the light-emission volume, which is placed to seal the free parts of the diode bracket (3) via the sides of the bracket; and
- a chip-protecting material, transparent at said wavelength(s), identical to or separate from the filling material, especially a material for preencapsulation (6') of the chips.

4. Diode module (200, 400, 600, 610, 620, 700), for a vehicle, according to the preceding claim, **characterized in that** the adhesive chip-protecting material, which is transparent at said wavelength(s), is identical to the filling material and is chosen from:
- an adhesive (6), optionally embedding the chips and fastening the chips to the glazing, i.e. to the first sheet, preferably to the edge face; or
- a double-sided adhesive (5), bonded to the chips and the bracket via one adhesive-coated side and bonded to the glazing, i.e. to the first sheet preferably to the edge face, via the other adhesive-coated side.

5. Diode module (100, 200, 210, 400, 500, 600, 610, 620, 700, 1100, 1200), for a vehicle, according to one of the preceding claims, **characterized in that** the polymer encapsulation (7) is made of polyurethane or of a flexible thermoplastic chosen from a thermoplastic elastomer (TPE), polyvinyl chloride (PVC) and ethylene-propylene-diene-terpolymer (EPDM).

6. Diode module, for a vehicle, according to the preceding claim, **characterized in that** it comprises, between the encapsulation and the glazing, especially mineral-glass glazing, a single-, two- or three-component primary layer, for example based on polyurethane, polyester, polyvinyl acetate or isocyanate.

7. Diode module (610, 620), for a vehicle, according to either of Claims 5 and 6, **characterized in that** the polymer encapsulation (7) makes contact with the chips, but not with their emitting faces (21), and even embeds the chips, except for their emitting faces.

8. Diode module, for a vehicle, according to Claim 7, **characterized in that** the bracket is a rectangular strip (3') bonded to and/or against the periphery of one of the main faces (12, 13) of the glazing.

9. Diode module (200, 210, 300), for a vehicle, according to one of Claims 1 to 7, **characterized in that** the bracket comprises a side part (3', 30) facing the edge face (10) of the first sheet and bearing chips, and **in that** the glazing comprises a layer, called an adhesive protective layer (50, 50'), at least as a border of one of the first or second faces:
- the protective layer that is transparent at the wavelength(s) protrudes (51), extending onto the edge face between the side part and the edge face and filling the light-emission volume and/or embedding said chips; or
- the protective layer protruding with a turned-down part covering the side part (3', 30), thus forming said external adhesive, preferably enveloping and/or bearing said bracket.

10. Diode module (200, 210), for a vehicle, according to the preceding claim, **characterized in that** the protective layer is a lamination interlayer (50), the glazing being laminated and comprising a second sheet (1'), laminated via the lamination interlayer to the first sheet (1).

11. Diode module (200), for a vehicle, according to either of Claims 9 and 10, **characterized in that** the bracket comprises a flange (31), on the face of the first sheet (11), in contact with the protective layer (50), the flange being discontinuous so that said protective layer can fill the coupling and/or chip volume.

12. Diode module (200), for a vehicle, according to one of Claims 9 to 11, **characterized in that** the side part is prolonged by a flange (31), on the face of the first sheet, in contact with the protective layer, having anchor regions (310) projecting into the protective layer.

13. Diode module (610), for a vehicle, according to one of Claims 1 to 8, **characterized in that** the glazing is laminated comprising a second sheet (1'), laminated via a lamination interlayer to the first sheet (1), and **in that** the first sheet comprises a recess for housing the diodes and opening onto the first and second main faces (11, 12), and **in that** the supporting bracket (3'), preferably a rectangular strip, is against, preferably bonded to, the periphery of the lamination face (13) of the second sheet so as to eliminate stray light from the second sheet, especially when the encapsulation (7) is flush with the face (14) of the second sheet opposite the lamination face.

14. Diode module (300, 1100, 1200) according to one of Claims 1 to 8, **characterized in that** the glazing is a single glazing, the first sheet (1) being made of glass or plastic, especially PC.

15. Diode module (610, 620), for a vehicle, according to one of the preceding claims, **characterized in that** the diodes are edge-emitting diodes, the emitting faces (21) facing the edge face of the first sheet and the diodes being arranged on the supporting bracket for fastening, preferably a rectangular strip, against and/or bonded to one of the main faces of the glazing preferably by a double-sided adhesive (60).

16. Diode module (100, 200, 210, 300, 400, 500, 600, 610, 620, 700, 1100, 1200), for a vehicle, according to one of the preceding claims, **characterized in that** the injection is carried out via the edge face of the first sheet via a coupling edge, said coupling edge of the first sheet (10) is preferably rounded and/or roughened.

17. Diode module (600, 610, 620, 1100), for a vehicle, according to one of Claims 1 to 16, **characterized in that** the edge face, the corner or an edge of one of the faces of the first sheet comprises one or more recesses in which the chips are placed and, in the case of a laminated glazing, the recess of the first sheet is a single groove opening onto the main faces of the first sheet.

18. Diode module (100, 200, 210, 300, 400, 500, 600, 610, 620, 700, 1100, 1200), for a vehicle, according to one of the preceding claims, **characterized in that** the distance between the part bearing chips and the first sheet is less than or equal to 5 mm, and/or the distance between the chips and the first sheet is less than or equal to 2 mm.

19. Diode module (100, 200, 300, 400, 500, 600, 700, 1200) according to one of the preceding claims, **characterized in that** the bracket has an optionally variable, local, substantially U-shaped cross section, and comprises:
- at least one side part (30) facing the edge face of the glazing, preferably bearing diodes which are not edge-emitting; and is
- prolonged by a flange (31), facing one main face (11) of the glazing on the periphery, preferably bearing edge-emitting diodes; and is
- prolonged by another flange (32) facing another main face (12) of the glazing on the periphery.

20. Diode module (100, 200, 210, 300, 400, 500, 600, 610, 620, 700, 1100, 1200), for a vehicle, according to one of the preceding claims, **characterized in that** by extracting the guided light an interior ambient light, a interior light for reading, or an interior or exterior luminous signaling display is formed.

21. Use of the diode module (100, 200, 210, 300, 400, 500, 600, 610, 620, 700, 1100, 1200), for a vehicle, according to one of the preceding claims, as:
- side windows, roof, rear window, windshield, of a land-based vehicle, especially an automobile, service vehicle, truck or train;
- window or windshield of an airborne vehicle; and
- windows or roof of an aquatic vehicle, boat or submarine.

22. Use of the diode module (100, 200, 210, 300, 400, 500, 600, 610, 620, 700, 1100, 1200), for a vehicle, according to one of the preceding claims as a roof of a land-based vehicle, especially an automobile, service vehicle, truck or train.

23. Vehicle incorporating the module (100, 200, 210, 300, 400, 500, 600, 610, 620, 700, 1100, 1200) according to one of the preceding claims.
